# EUROPEAN PATENT SPECIFICATION

(11) **EP 3 025 898 B1**
(45) Date of publication and mention of the grant of the patent: **21.12.2016**
(21) Application number: 15173123.9
(22) Date of filing: 22.06.2015
(51) Int. Cl.: B60L 11/00, B62M 6/40

(54) **BATTERY-ASSISTED BICYCLE**
BATTERIEUNTERSTÜTZTES FAHRRAD
VELO ASSISTE PAR UNE BATTERIE

(30) Priority: 26.06.2014 JP 2014131260
(43) Date of publication of application: 01.06.2016
(73) Proprietor: Yamaha Hatsudoki Kabushiki Kaisha, Iwata-shi, Shizuoka 438-8501 (JP)
(72) Inventor: KAMIYA, Satoshi, Iwata-shi, Shizuoka 438-8501 (JP); KINPARA, Yuki, Iwata-shi, Shizuoka 438-8501 (JP)
(74) Representative: Grünecker Patent- und Rechtsanwälte PartG mbB

(56) References cited:
- EP-A1- 1 953 079
- JP-A- H11 105 777
- JP-A- 2000 085 675

## Description

The present invention relates to a battery-assisted bicycle that assists the user with the pedal effort by driving force by an electric motor.

### Description of the Background Art

There has been a known battery-assisted bicycle that assists the user with the pedal effort by detecting torque generated at a crankshaft rotating together with the pedals and controlling an electric motor using the detection result.

A battery-assisted bicycle provided with a driving unit including an electric motor and a battery weighs more than a bicycle without a battery-assisting function for its. When for example the user walks the battery-assisted bicycle rather than riding the vehicle, the user may find it troublesome to move the heavy vehicle. Therefore, in some known battery-assisted bicycles, the electric motor is operated to assist the movement of the battery-assisted bicycle when the user moves the vehicle with no pedal effort.

A battery-assisted bicycle disclosed by JP 11-105777 A determines whether the user moves the battery-assisted bicycle with no pedal effort when the switch is turned on based on a pedal rotation speed and a pedal load. If it is determined that the user moves the battery-assisted bicycle without riding the vehicle, the electric motor is activated to assist the movement of the battery-assisted bicycle.

In the battery-assisted bicycle disclosed by JP 11-105777 A, the electric motor is operated to assist the movement of the battery-assisted bicycle while the switch is operated by the hand and kept on. The moment the hand is detached from the switch and the switch is turned off, the electric motor stops.

When the user walks the battery-assisted bicycle without riding the battery-assisted bicycle, the user may let go of the switch in some cases. The user may move the hand apart from the switch to hold the handle by both hands or let go of the switch inadvertently for example by vibrations. When the user lets go of the switch, the switch is turned off at the time, and the assist force by the electric motor abruptly changes before the user can hold the handle with both hands. As a result, the user may not be able to easily support the battery-assisted bicycle in some cases.

An object of the present invention is to provide a battery-assisted bicycle less prone to abrupt change in assist force as the assist by the electric motor is stopped while the battery-assisted bicycle moves by the assist with no pedal effort.

According to the present invention said object is solved by a battery-assisted bicycle having the features of at least one of the independent claims 1, 5, 9 and 13. Preferred embodiments are laid down in the dependent claims.

A battery-assisted bicycle according to an embodiment is configured to assist by electric motor driving force and includes the electric motor, a vehicle speed calculator that calculates a vehicle speed of the battery-assisted bicycle, a first state determiner that determines that the battery-assisted bicycle is in a first state in which the battery-assisted bicycle moves by the driving force by the electric motor with no pedal effort, an operation unit capable of outputting a stop signal (which is an example of an operation signal: hereinafter also referred to as the "operation signal") used to give instruction to stop the electric motor, a timing unit that measures time from when the stop signal is input, and a motor controller that controls driving of the electric motor so that a vehicle speed attained when elapsed time from the point of input of the stop signal reaches a prescribed first period is a first vehicle speed and stops the electric motor after the first period, if the first state determiner determines that the battery-assisted bicycle is in the first state and the stop signal is input from the operation unit.

In the battery-assisted bicycle according the embodiment, while the battery-assisted bicycle moves by driving force by the electric motor with no pedal effort, the operation unit is operated to give assist stop instruction and the control to stop the assist is performed. In the control to stop the assist, the first period is secured as time before the electric motor is stopped. Therefore, the assist force is unlikely to change abruptly, and therefore the user can stably support the battery-assisted bicycle.

### BRIEF DESCRIPTION OF THE DRAWINGS

Fig. 1 is a right side view of a general structure of a battery-assisted bicycle according to a first embodiment.
Fig. 2 is a view of a general structure of a driving unit and a driven sprocket in the battery-assisted bicycle according to the first embodiment.
Fig. 3 is a sectional view taken along line III-III in Fig. 2.
Fig. 4 is an enlarged plan view of a left brake lever attached to a handle.
Fig. 5 is a schematic block diagram of paths for motive power transmission and signal transmission in the battery-assisted bicycle according to the first embodiment.
Fig. 6 is a block diagram of a general configuration of an assist controller in the battery-assisted bicycle according to the first embodiment.
Fig. 7 is a flowchart for illustrating assist control in the battery-assisted bicycle according to the first embodiment.
Fig. 8 is a graph showing changes in estimated vehicle speed in the assist control in the battery-assisted bicycle according to the first embodiment.
Fig. 9 is a block diagram of a general configuration of an assist controller in the battery-assisted bicycle according to a second embodiment.
Fig. 10 is a flowchart for illustrating assist control in the battery-assisted bicycle according to the second embodiment.
Fig. 11 is a graph showing changes in estimated vehicle speed in the assist control in the battery-assisted bicycle according to the second embodiment.
Fig. 12 is a block diagram of a general configuration of an assist controller in a battery-assisted bicycle according to a third embodiment.
Fig. 13 is a flowchart for illustrating assist control in the battery-assisted bicycle according to the third embodiment.
Fig. 14 is a graph showing changes in driving force in assist control in the battery-assisted bicycle according to the third embodiment.
Fig. 15 is a block diagram of a general configuration of an assist controller in a battery-assisted bicycle according to a fourth embodiment.
Fig. 16 is a flowchart for illustrating assist control in the battery-assisted bicycle according to the fourth embodiment.
Fig. 17 is a graph showing changes in driving force in the assist control in the battery-assisted bicycle according to the fourth embodiment.
Fig. 18 is a block diagram of a general configuration of an assist controller in a battery-assisted bicycle according to a fifth embodiment.
Fig. 19 is a flowchart for illustrating assist control in the battery-assisted bicycle according to the fifth embodiment.
Fig. 20 is a graph showing changes in estimated vehicle speed in assist control in the battery-assisted bicycle according to the fifth embodiment.
Fig. 21 is a block diagram of a general configuration of an assist controller in a battery-assisted bicycle according to a sixth embodiment.
Fig. 22 is a flowchart for illustrating assist control in the battery-assisted bicycle according to the sixth embodiment.
Fig. 23 is a graph showing changes in estimated vehicle speed in assist control in the battery-assisted bicycle according to the sixth embodiment.
Fig. 24 is a block diagram of a general configuration of an assist controller in a battery-assisted bicycle according to a seventh embodiment.
Fig. 25 is a flowchart for illustrating assist control in the battery-assisted bicycle according to the seventh embodiment.
Fig. 26 is a graph showing changes in driving force in assist control in the battery-assisted bicycle according to the seventh embodiment.
Fig. 27 is a block diagram of a general configuration of an assist controller in a battery-assisted bicycle according to an eighth embodiment.
Fig. 28 is a flowchart for illustrating assist control in the battery-assisted bicycle according to the eighth embodiment.
Fig. 29 is a graph showing changes in driving force in the assist control in the battery-assisted bicycle according to the eighth embodiment.

### DESCRIPTION OF THE EMBODIMENTS

Now, preferred embodiments will be described in conjunction with the accompanying drawings. It is noted that the elements in the drawings are neither drawn faithfully to their actual sizes nor to scale.

In the following description, forward, rearward, leftward, or rightward refer to these directions as seen by the rider holding a handle 23 and seated on a seat 24 of a battery-assisted bicycle 1.

### First Embodiment

### Overall Structure of Battery-assisted Bicycle

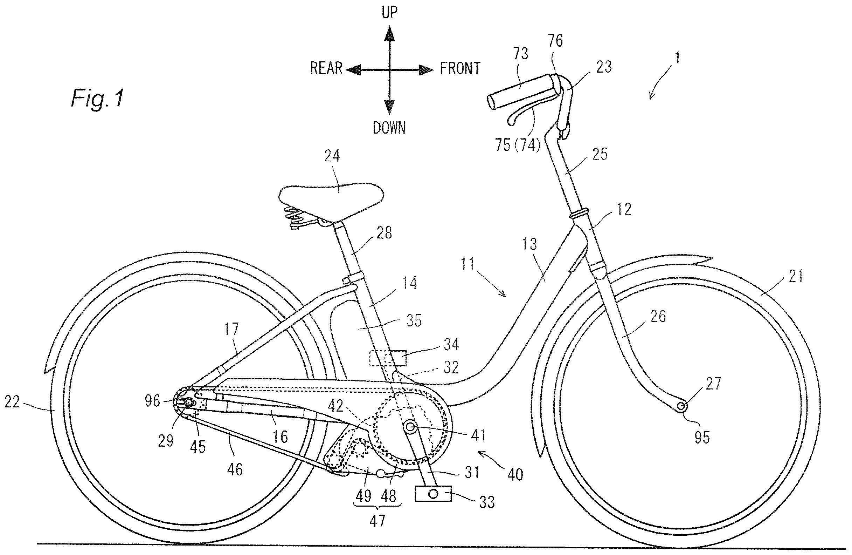

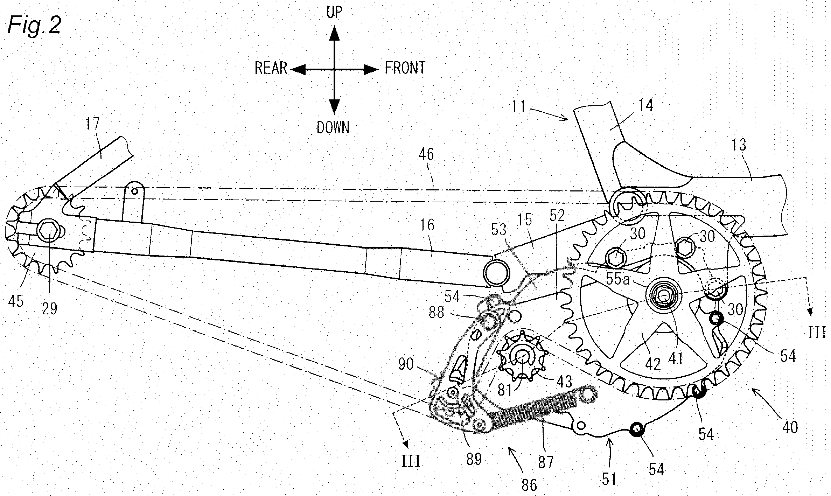

Fig. 1 is a right side view of a general structure of the battery-assisted bicycle 1 according to a first embodiment. Fig. 2 is a view of a general structure of a driving unit 40 and a driven sprocket 45 in the battery-assisted bicycle 1 according to the first embodiment.

As shown in Fig. 1, the battery-assisted bicycle 1 has a vehicle body frame 11. The vehicle body frame 11 extends in a front-back direction. The vehicle body frame 11 has a head pipe 12, a down frame 13, a seat frame 14, a pair of chain stays 16, and a pair of seat stays 17. The head pipe 12 is provided at a front part of the battery-assisted bicycle 1. The head pipe 12 is connected with a front end of the down frame 13. The down frame 13 extends in the front-back direction. The seat frame 14 is connected to a rear end of the down frame 13. The seat frame 14 extends upward and obliquely backward from the rear end of the down frame 13.

As shown in Fig. 2, a bracket 15 is attached to the rear end of the down frame 13. The pair of chain stays 16 is connected to a rear end of the bracket 15. The pair of chain stays 16 is provided to hold a rear wheel 22 from the left and right. As shown in Fig. 1, the rear end of each of the chain stays 16 is connected with one end of a seat stay 17. The pair of seat stays 17 is provided to hold the rear wheels 22 from the left and right. The other end of each of the seat stays 17 is connected to an upper end of the seat frame 14.

The head pipe 12 has a handle stem 25 rotatably inserted therein. A handle 23 is secured to an upper end of the handle stem 25. A front fork 26 is secured to a lower end of the handle stem 25. A front wheel 21 is rotatably supported by an axle 27 at a lower end of the front fork 26. The axle 27 is provided with a front wheel rotation detector 95 that detects a rotation speed of the front wheel 21.

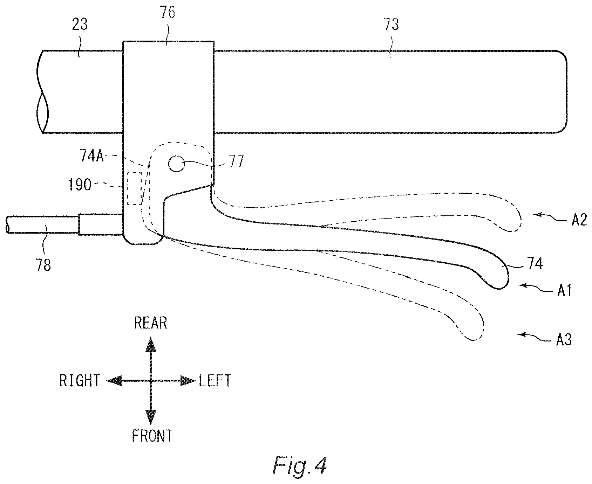

Grips 73 are attached to left and right ends of the handle 23. A left brake lever 74 is attached to a left part of the handle 23 and a right brake lever 75 is attached to a right part of the handle 23. The left brake lever 74 is used to operate a brake (not shown) for the rear wheel 22. The right brake lever 75 is used to operate a brake (not shown) for the front wheel 21. The left brake lever 74 is also used to operate an operation unit 190 (see Fig. 4) that will be described.

A seat pipe 28 is inserted in the cylindrical seat frame 14. The seat 24 is provided at an upper end of the seat pipe 28.

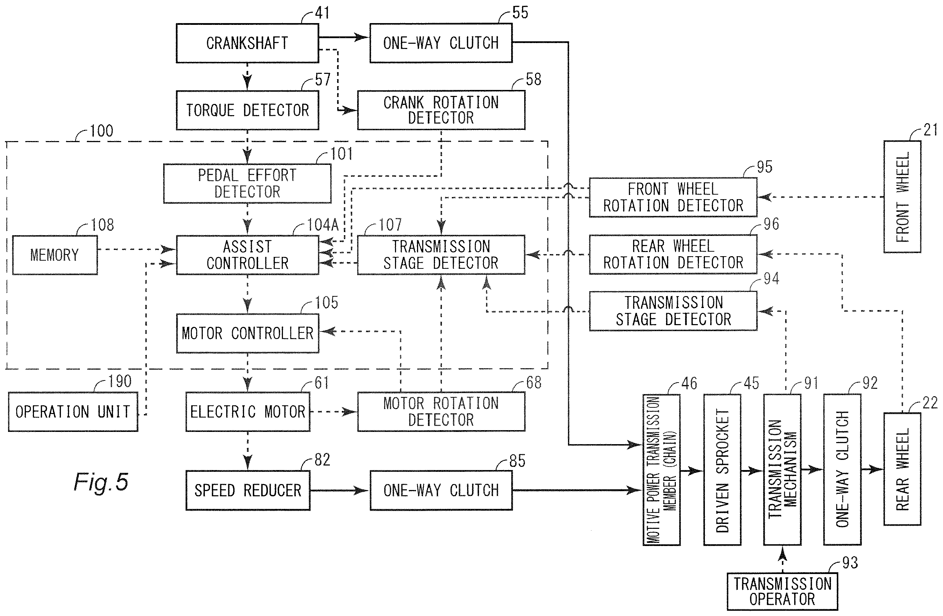

The rear wheel 22 is supported rotatably by an axle 29 at the rear ends of the pair of chain stays 16. The driven sprocket 45 is provided co-axially with the axle 29 at the right of the rear wheel 22. The driven sprocket 45 is coupled to the rear wheel 22 through a one-way clutch 92 (see Fig. 5). The driven sprocket 45 is provided with a rear wheel rotation detector 96 that detects a rotation speed of the rear wheel 22.

A chain cover 47 is attached to the vehicle body frame 11. The chain cover 47 has a main cover 48 and a sub cover 49. The main cover 48 extends in the front-back direction. The main cover 48 covers a front right part of the driving unit 40 and the chain 46. The sub cover 49 covers a rear right part of the driving unit 40.

A battery unit 35 is provided behind the seat frame 14. The battery unit 35 supplies the electric motor 61 of the driving unit 40 with electric power. The battery unit 35 has a battery and a battery controller (not shown). The battery is a rechargeable battery. The battery controller controls charging/discharging to/from the battery and monitors for output current from the battery and its remaining capacity.

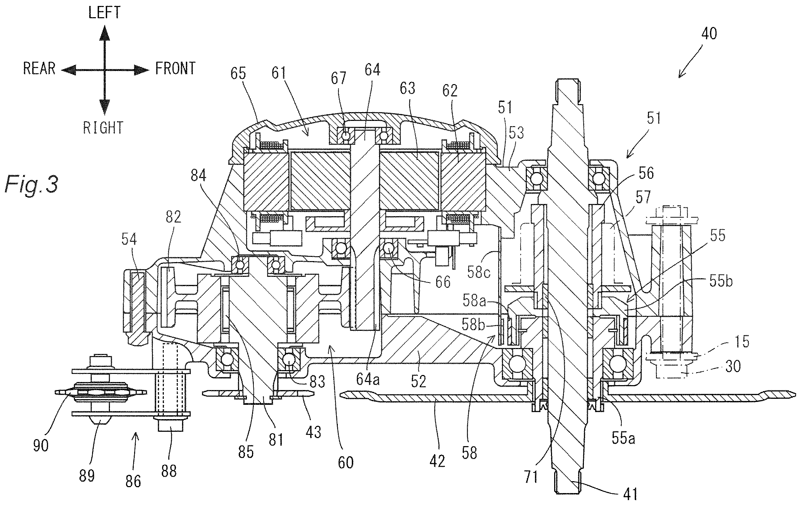

Fig. 3 is a sectional view of the driving unit 40 taken along III-III in Fig. 2. As shown in Fig. 3, the driving unit 40 has a main body part 51, a crankshaft 41, a driving force generator 60, a chain tensioner 86, and a controller 100 (see Fig. 1).

The main body part 51 has first and second cases 52 and 53. The first and second cases 52 and 53 are integrated with each other as the left and right parts and secured with each other by a plurality of metal fasteners 54. The main body part 51 is attached to the bracket 15 by a metal fastener 30.

The crankshaft 41 is provided through a front part of the main body part 51 in a left-right direction. The crankshaft 41 is supported rotatably to the main body part 51 through a plurality of bearings.

Crank arms 31 and 32 are provided at the ends of the crankshaft 41. Pedals 33 and 34 are attached to tip ends of the crank arms 31 and 32, respectively. As the user pushes the pedals 33 and 34 around, the crankshaft 41 rotates. A chain 46 is wound around a driving sprocket 42 and runs between the driving sprocket and the driven sprocket 45.

The crankshaft 41 is provided with a rotation member 56, a one-way clutch 55, and the driving sprocket 42 coaxially with the crankshaft 41. The rotation member 56 is provided in a center of the crankshaft 41 in the left-right direction. The rotation member 56 is substantially cylindrical. A right end of the rotation member 56 is supported by the crankshaft 41 through a cylindrical slide bearing 71. A left end of the rotation member 56 is connected to the crankshaft 41. The left end of the rotation member 56 and the crankshaft 41 are connected for example in a spline arrangement. In this way, the rotation member 56 rotates together with the crankshaft 41.

The one-way clutch 55 is provided at a right part of the crankshaft 41. The one-way clutch 55 has an inner member 55a and an outer member 55b.

The inner member 55a is provided at the right of the rotation member 56. The inner member 55a is substantially cylindrical and rotatable relative to the crankshaft 41. The driving sprocket 42 is attached at an outer circumferential surface of a right end of the inner member 55a.

The outer member 55b is provided to overlap a right part of the rotation member 56 and a left part of the inner member 55a. The outer member 55b is substantially cylindrical. The outer member 55b and the rotation member 56 are connected. The outer member 55b and the rotation member 56 are connected for example in a spline arrangement. In this way, the outer member 55b and the rotation member 56 are rotated together.

The outer member 55b and the inner member 55a are connected to transmit rotation force only in a forward rotation direction (clockwise as viewed from the right side of the battery-assisted bicycle 1 as shown in Fig. 1, which shall apply hereinafter) from the outer member 55b to the inner member 55a. The outer member 55b and the inner member 55a are connected for example in a ratchet arrangement. Rotation force in a backward rotation direction (anticlockwise as viewed from the right side of the battery-assisted bicycle 1 as shown in Fig. 1, which shall apply hereinafter) is not transmitted from the outer member 55b to the inner member 55a.

The crankshaft 41, the driving sprocket 42, the one-way clutch 55, and the rotation member 56 are arranged as described above. In this way, when the user pushes the pedals 33 and 34 around and rotates the crankshaft 41 in the forward rotation direction to advance the battery-assisted bicycle 1, the user's pedal effort is transmitted from the crankshaft 41 to the rotation member 56 and the outer member 55b. The forward rotation of the outer member 55b is transmitted to the inner member 55a. Therefore, the driving sprocket 42 attached to the inner member 55a rotates in the forward rotation direction. On the other hand, when the user rotates the crankshaft 41 in the backward rotation direction, the ratchet arrangement prevents the backward rotation from being transmitted from the outer member 55b to the inner member 55a. Therefore, the inner member 55a and the driving sprocket 42 are not rotated in the backward rotation direction.

The driving unit 40 is provided with a torque detector 57 and a crank rotation detector 58. The torque detector 57 detects torque generated at the crankshaft 41 by pedal effort. The torque detector 57 is for example a magnetostrictive torque sensor. When the torque detector 57 is a magnetostrictive torque sensor, the torque detector 57 has a coil provided opposed to an outer circumferential surface of the rotation member 56. The torque detector 57 detects distortion of the rotation member 56 as a change in voltage generated at the coil in order to detect the torque generated at the crankshaft 41. The torque detector 57 outputs a signal according to the detected torque to the controller 100.

The torque detector 57 may be any detector capable of detecting a pedal effort other than the magnetostrictive torque sensor. The torque detector 57 may detect the torque at the crankshaft 41 from tension generated at the chain 46 instead of directly detecting the torque at the crankshaft 41.

The crank rotation detector 58 detects the rotation of the crankshaft 41. The crank rotation detector 58 according to the embodiment detects the rotation of the crankshaft 41 based on the rotation of the outer member 55b of the one-way clutch 55. The crank rotation detector 58 has a magnet 58a and an encoder 58b. The magnet 58a is substantially cylindrical and provided on an outer circumferential surface of the outer member 55b. The encoder 58b is provided in a position opposed to an outer circumferential surface of the magnet 58a. The encoder 58b is supported by a resin support member 58c. As the outer member 55b rotates, a magnetic field by the magnet 58a changes, and the encoder 58b detects the change in the magnetic field. The crank rotation detector 58 outputs the change in the magnetic field as a pulse signal to the controller 100.

The driving force generator 60 is provided in a center of the main body part 51 in the front-back direction. The driving force generator 60 has the electric motor 61, an output shaft 81, and a gear 82.

The electric motor 61 generates assist driving force used to assist traveling of the battery-assisted bicycle 1 by a pedal effort in response to a control signal output from the controller 100. The electric motor 61 generates assist driving force used to assist the movement of the battery-assisted bicycle 1 with no pedal effort in response to a control signal output from the controller 100.

The electric motor 61 has a stator 62, a rotor 63, and a rotation shaft 64. The stator 62 is secured to the second case 53 of the main body part 51. The second case 53 is attached with a motor cover 65 that covers a left side part of the electric motor 61. The rotation shaft 64 is supported rotatably at the second case 53 and the motor cover 65 through rolling bearings 66 and 67. The rotor 63 is secured to the rotation shaft 64. A gear groove 64a is formed from a right end to a center at an outer circumference of the rotation shaft 64.

The electric motor 61 is provided with a motor rotation detector 68 (see Fig. 5). The motor rotation detector 68 detects the rotation of the rotor 63. The motor rotation detector 68 has an encoder used to detect the rotation of the rotor 63. The motor rotation detector 68 outputs a signal according to the detected rotation of the rotor 63 to the controller 100.

The output shaft 81 is provided behind the rotation shaft 64. The output shaft 81 is supported rotatably by a rolling bearing 83 provided at the first case 52 of the main body part 51 and a rolling bearing 84 provided at the second case 53 of the main body part 51.

The gear 82 is attached to the output shaft 81 through a one-way clutch 85. The gear 82 is provided coaxially with the output shaft 81 between the rolling bearings 83 and 84. The gear 82 engages with the gear groove 64a formed at the rotation shaft 64 of the electric motor 61. The gear groove 64a formed at the rotation shaft 64 and the gear 82 form a speed reducer 80. According to the embodiment, when the electric motor 61 is activated, the rotation shaft 64 rotates in the forward rotation direction. Therefore, the gear 82 rotates in the backward rotation direction by the forward rotation of the rotation shaft 64.

The one-way clutch 85 is configured to transmit only backward rotation generated at the gear 82 or the output shaft 81. Therefore, when the electric motor 61 is activated to rotate the gear 82 backward, the rotation is transmitted to the output shaft 81 and the output shaft 81 is rotated in the backward rotation direction. On the other hand, when the output shaft 81 rotates forward, the forward rotation is not transmitted to the gear 82.

An auxiliary sprocket 43 is provided at a right end of the output shaft 81. The auxiliary sprocket 43 and the output shaft 81 are connected for example in a spline arrangement. In this way, when the electric motor 61 is activated, the rotation of the rotation shaft 64 of the electric motor 61 is transmitted to the auxiliary sprocket 43 through the gear 82, the on-way clutch 85, and the output shaft 81. More specifically, assist driving force generated at the driving force generator 60 is transmitted from the output shaft 81 to the auxiliary sprocket 43, so that the auxiliary sprocket 43 is rotated in the backward rotation direction.

The chain tensioner 86 is provided at a rear part of the main body part 51. A tension sprocket 90 is attached to the chain tensioner 86 in a rotatable manner by a support bolt 89. As shown in Fig. 2, the chain tensioner 86 has one end connected rotatably to the first case 52 by a support bolt 88. The other end of the chain tensioner 86 is connected to the first case 52 through a tensile spring 87. The tension sprocket 90 has a chain 46 wound thereon so that the tension sprocket 90 is pushed backward. The chain tensioner 86 provides the chain 46 with appropriate tension by the elastic force of the tensile spring 87.

As shown in Fig. 2, in the battery-assisted bicycle 1 according to the embodiment, the driving sprocket 42 and the auxiliary sprocket 43 transmit driving force to the rear wheel 22 through the chain 46. More specifically, a pedal effort generated as the user pushes the pedals 33 and 34 rotates the driving sprocket 42 in the forward rotation direction and is transmitted as driving force to rotate the rear wheel 22 in the forward rotation direction through the chain 46. The rotation force generated by operation of the electric motor 61 rotates the auxiliary sprocket 43 in the backward rotation direction and is transmitted to the rear wheel 22 through the chain 46 as assist driving force to rotate the rear wheel 22 in the forward rotation direction. In this way, the pedal effort generated as the user pushes the pedals 33 and 34 is assisted by the driving force output from the electric motor 61.

The battery-assisted bicycle 1 activates the electric motor 61 under a prescribed condition when for example the user walks the battery-assisted bicycle 1 without riding the battery-assisted bicycle 1. The rotation force of the electric motor 61 is transmitted as assist driving force to rotate the rear wheel 22 forward through the chain 46 and assists the movement of the battery-assisted bicycle 1.

Note that the rotation of the chain 46 is transmitted to the rear wheel 22 through the driven sprocket 45, a transmission mechanism 91, and the one-way clutch 92 as shown in Fig. 5. The transmission mechanism 91 is operated by a transmission operator 93. The transmission operator 93 is provided for example at the handle 23.

The controller 100 controls the assist in the battery-assisted bicycle 1 by controlling the output of the electric motor 61. The controller 100 controls the output of the electric motor 61 according to the user's pedal effort. The controller 100 controls the output of the electric motor 61 under a prescribed condition when there is no pedal effort by the user. The controller 100 can be provided for example near the electric motor 61 but the controller may be provided somewhere else.

Fig. 4 is an enlarged plan view of the left brake lever 74 attached to the handle 23. As shown in Fig. 4, the left brake lever 74 is attached at a left part of the handle 23 through a bracket 76. The left brake lever 74 is supported by a shaft 77 relative to the bracket 76. Therefore, the left brake lever 74 can move to position A1, A2 or A3 around the shaft 77. If the user operates the left brake lever 74 by the hand and moves the lever to position A2 or A3, the brake lever returns to position A1 by an elastic member that is not shown once the user lets go of the lever. A brake wire 78 is coupled to the left brake lever 74. When the left brake lever 74 is in position A1, the brake for the rear wheel 22 is not applied. When the left brake lever 74 is in position A2, the brake for the rear wheel 22 is applied through the brake wire 78. When the left brake lever 74 is in position A3, control to stop the assist is performed.

The operation unit 190 is provided at the right of the shaft 77 in the bracket 76. The operation unit 190 is for example a limit switch. When the left brake lever 74 is in position A1 or A2, a right end 74A of the left brake lever 74 is not in contact with the operation unit 190. When the left brake lever 74 is in position A3, the right end 74A of the left brake lever 74 is in contact with the operation unit 190. When the right end 74A of the left brake lever 74 contacts the operation unit 190, the operation unit outputs a stop signal that gives instruction to stop the electric motor 61 to the controller 100.

### Assist Control

Fig. 5 is a block diagram showing signal exchange and motive power transmission when assist by the electric motor 61 is carried out in the battery-assisted bicycle 1. In Fig. 5, the signal exchange is indicated by the broken line arrow and the motive power transmission is indicated by the solid line arrow in the process of control. In Fig. 5, the same reference characters as those in Figs. 1 to 4 have the same structures in the battery-assisted bicycle 1.

In the following, assist while the user walks the battery-assisted bicycle 1 without riding the battery-assisted bicycle 1, in other words, assist while the battery-assisted bicycle 1 moves with no pedal effort will be described. Hereinafter, control of the assist while the battery-assisted bicycle 1 moves with no pedal effort will be referred to as "assist control" in some cases. The "assist control" also includes the control to stop the assist while the battery-assisted bicycle 1 moves with no pedal effort. Note that output control for the electric motor 61 while the battery-assisted bicycle 1 travels by a pedal effort will not be described.

As shown in Fig. 5, the controller 100 includes a pedal effort detector 101, a transmission stage detector 107, a memory 108, an assist controller 104A, and a motor controller 105.

The pedal effort detector 101 obtains a pedal effort made by the user based on torque at the crankshaft 41 detected by the torque detector 57.

The transmission stage detector 107 detects the present transmission stage based on the rotation speed of the electric motor 61 detected by the motor rotation detector 68 and the rotation speed of the rear wheel 22 detected by the rear wheel rotation detector 96.

The memory 108 stores various programs carried out by the assist controller 104A and data.

The assist controller 104A calculates driving force by the electric motor 61 requested in carrying out the assist control while the battery-assisted bicycle moves with no pedal effort.

The motor controller 105 controls driving of the electric motor 61 so that the electric motor 61 outputs the necessary driving force calculated by the assist controller 104A. The motor controller 105 controls driving of the electric motor 61 in response to the rotation speed of the electric motor 61 detected by the motor rotation detector 68.

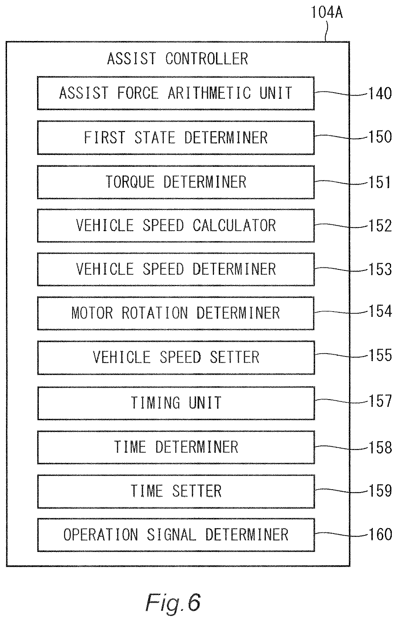

Fig. 6 is a diagram of a general configuration of the assist controller 104A in the battery-assisted bicycle according to the first embodiment. As shown in Fig. 6, the assist controller 104A includes an assist force arithmetic unit 140, a first state determiner 150, a torque determiner 151, a vehicle speed calculator 152, a vehicle speed determiner 153, a motor rotation determiner 154, a vehicle speed setter 155, a timing unit 157, a time determiner 158, a time setter 159, and an operation signal determiner 160.

The first state determiner 150 determines whether the vehicle traveling state of the battery-assisted bicycle 1 is a first state. In the first state, the battery-assisted bicycle 1 moves by driving force by the electric motor 61 with no pedal effort. For example, the user walks the battery-assisted bicycle 1 without riding the battery-assisted bicycle 1 and the electric motor 61 assists the movement in the first state.

The torque determiner 151 determines whether the torque detected by the torque detector 57 is equal to or less than a prescribed value. The prescribed value is set to a small value based on which it can be determined that the user does not push the pedals 33 and 34.

The vehicle speed calculator 152 calculates a vehicle speed of the battery-assisted bicycle 1 from the rotation speed of the front wheel 21 detected by the front wheel rotation detector 95. The vehicle speed calculator 152 calculates the vehicle speed of the battery-assisted bicycle 1 based on the rotation speed of the electric motor 61 detected by the motor rotation detector 68, the present transmission stage detected by the transmission stage detector 107, the outer diameter of the rear wheel 22 as a driving wheel, and the like. Hereinafter, an actual vehicle speed of the battery-assisted bicycle 1 calculated based on a detection result from the front wheel rotation detector 95 will be referred to as a "real vehicle speed." A vehicle speed of the battery-assisted bicycle 1 calculated based on the rotation speed of the electric motor 61 and the like will be referred to as an "estimated vehicle speed." The real vehicle speed and the estimated vehicle speed match in some cases and do not in other cases depending on the environment in which the battery-assisted bicycle 1 is used (such as the inclination of a downward slope) or the condition such as the user's power to propel the battery-assisted bicycle 1. They do not match for example when the speed of the battery-assisted bicycle 1 walked by the user is high and the real speed is higher than the estimated speed.

The vehicle speed determiner 153 determines whether the real vehicle speed calculated by the vehicle speed calculator 152 is equal to or less than a prescribed value. The prescribed value is set to a vehicle speed lower than normal vehicle speeds when the battery-assisted bicycle 1 travels by a pedal effort and is set as a vehicle speed attained when the user walks the battery-assisted bicycle 1 without riding the battery-assisted bicycle 1. For example, the prescribed value can be set to 5 km/h. Note that the vehicle speed determiner 153 may determine whether the estimated vehicle speed calculated by the vehicle speed calculator 152 is more than zero and equal to or less than the prescribed value.

The motor rotation determiner 154 determines whether the rotation speed of the electric motor 61 detected by the motor rotation detector 68 is equal to or higher than a prescribed value. More specifically, the motor rotation determiner 154 determines whether the electric motor 61 rotates and the assist control is carried out.

If the first state determiner 150 determines that the battery-assisted bicycle 1 is in the first state and a stop signal is input from the operation unit 190, the vehicle speed setter 155 sets an estimated vehicle speed of the battery-assisted bicycle 1 at the point corresponding to the input of the stop signal as a second vehicle speed. A first vehicle speed, which is an estimated vehicle speed equal to or lower than the second vehicle speed, is set as a target vehicle speed to be achieved when the elapsed time from the point of input of the stop signal reaches a prescribed first period. The vehicle speed setter 155 thus sets the first vehicle speed equal to or less than the second vehicle speed in order to maintain or reduce assist force by the battery-assisted bicycle 1 in the assist control.

The assist force arithmetic unit 140 produces driving force by the electric motor 61 using the various programs and data stored in the memory 108. More specifically, the driving force by the electric motor 61 is calculated using feedback control so that the estimated vehicle speed calculated by the vehicle speed calculator 152 is equal to the estimated vehicle speed set by the vehicle speed setter 155.

If the first state determiner 150 determines that the battery-assisted bicycle 1 is in the first state and the stop signal is input from the operation unit 190, the timing unit 157 measures time from the point of input of the stop signal.

If the stop signal is input from the operation unit 190, the time determiner 158 determines whether the elapsed time from the point of input of the stop signal has reached the first period.

The time setter 159 sets the length of time from the point of input of the stop signal from the operation unit 190 until the electric motor 61 is stopped as the first period. The length of time from the point of input of the stop signal to the stopping of the electric motor 61 may be set to a different length of time from the first period depending on the environment in which the battery-assisted bicycle 1 is used.

The operation signal determiner 160 determines whether the stop signal is input from the operation unit 190.

### Assist Control Flow

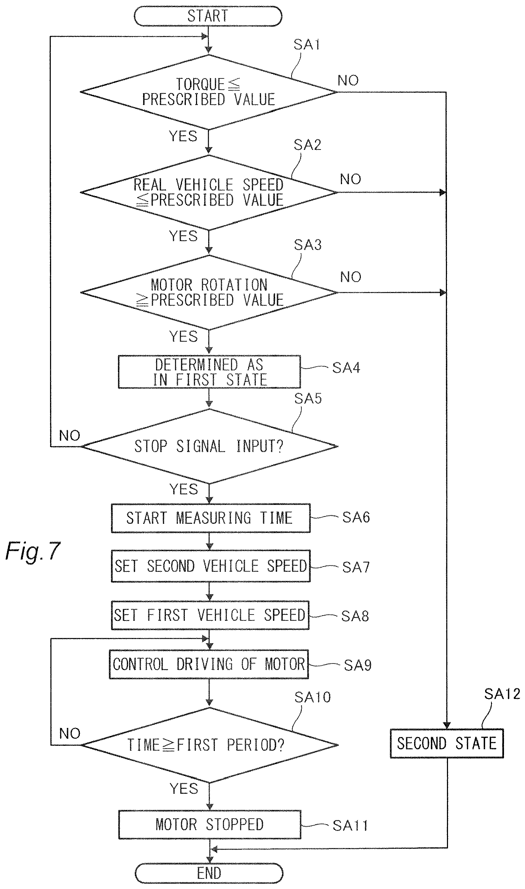

Fig. 7 is a flowchart for illustrating the assist control in the battery-assisted bicycle 1 according to the first embodiment. The assist control carried out to assist the movement of the battery-assisted bicycle 1 while the battery-assisted bicycle 1 is moved with no pedal effort will be described by referring to the flow in Fig. 7.

As the assist control flow as shown in Fig. 7 starts (START), the torque determiner 151 determines in step SA1 whether torque detected by the torque detector 57 is equal to or less than the prescribed value.

If the torque determiner 151 determines that the torque is equal to or less than the prescribed value (YES), the control proceeds to step SA2.

If it is determined in step SA1 that the torque is more than the prescribed value (NO), the control proceeds to step SA12, and it is determined that the battery-assisted bicycle 1 is not in the first state (in which case the battery-assisted bicycle 1 travels for example by pedaling; hereinafter the state will be referred to as the "second state"), and the flow ends (END).

In step SA2, the vehicle speed determiner 153 determines whether a real vehicle speed calculated by the vehicle speed calculator 152 is equal to or less than the prescribed value (5 km/h, for example). The real vehicle speed is calculated based on the rotation speed of the front wheel 21 detected by the front wheel rotation detector 95.

If it is determined in step SA2 that the real vehicle speed is equal to or less than the prescribed value (YES), the control proceeds to step SA3.

On the other hand, if it is determined in step SA2 that the real vehicle speed is more than the prescribed value (NO), the control proceeds to step SA12, and it is determined that the battery-assisted bicycle 1 is in the second state and not in the first state (such as when the user rides the battery-assisted bicycle 1 and travels without pedaling), and the flow ends (END).

In step SA3, the motor rotation determiner 154 determines whether the motor rotation detected by the motor rotation detector 68 is equal to or more than the prescribed value.

If it is determined in step SA3 that the motor rotation is equal to or more than the prescribed value (YES), the control proceeds to step SA4 and the first state determiner 150 determines that the battery-assisted bicycle 1 is in the first state.

If it is determined in step SA3 that the motor rotation is less than the prescribed value (NO), the control proceeds to step SA12, and it is determined that the battery-assisted bicycle 1 is in the second state (such as when the assist by the electric motor 61 stops) and not in the first state, and the flow ends (END).

After it is determined in step SA4 that the battery-assisted bicycle 1 is in the first state, the operation signal determiner 160 determines in step SA5 whether the stop signal used to give instruction to stop the electric motor 61 is input from the operation unit 190.

If it is determined in step SA5 that the stop signal is input from the operation unit 190 (YES), the control proceeds to step SA6.

On the other hand, if it is determined in step SA5 that the stop signal is not input from the operation unit 190 (NO), the control returns to step SA1 and resumes determining whether the vehicle state of the battery-assisted bicycle 1 is the first state.

In step SA6, the timing unit 157 starts measuring time from the point of input of the stop signal.

In step SA7, the vehicle speed setter 155 sets an estimated vehicle speed at the point corresponding to the input of the stop signal as a second vehicle speed.

In step SA8, the vehicle speed setter 155 sets a first vehicle speed equal to or lower than the second vehicle speed as a target vehicle speed. The first vehicle speed is set lower than the second vehicle speed according to the embodiment.

In step SA9, the assist force arithmetic unit 140 produces driving force by the electric motor 61 so that the estimated vehicle speed of the battery-assisted bicycle 1 changes from the second vehicle speed to the first vehicle speed.

More specifically, the assist force arithmetic unit 140 produces the driving force by the electric motor 61 using feedback control so that the estimated vehicle speed calculated by the vehicle speed calculator 152 changes from the second vehicle speed to the first vehicle speed when the elapsed time from the point of input of the stop signal reaches the prescribed first period. The motor controller 105 controls driving of the electric motor 61 so that the electric motor 61 outputs the driving force produced by the assist force arithmetic unit 140.

In step SA10, the time determiner 158 determines whether the elapsed time from the point of input of the stop signal has reached the prescribed first period.

If the time determiner 158 determines in step SA10 that the elapsed time from the input of the stop signal has reached the prescribed first period (YES), the motor controller 105 stops the electric motor 61 in step SA11 according to the driving force produced by the assist force arithmetic unit 140.

On the other hand, if the time determiner 158 determines that the elapsed time from the point of input of the stop signal has not reached the first period (NO), the control returns to step SA9 and continues to control driving of the electric motor 61.

The electric motor 61 is stopped in step SA11 and this ends the assist control (END).

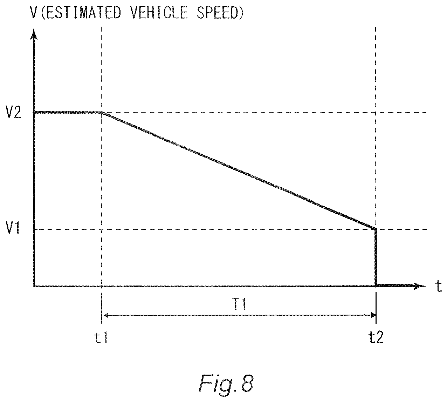

Fig. 8 is a graph showing changes in the estimated vehicle speed in the assist control in the battery-assisted bicycle 1 according to the first embodiment. The abscissa represents time t and the ordinate represents estimated vehicle speed V. Assume that at time t1, the first state determiner 150 determines that battery-assisted bicycle 1 is in the first state and the stop signal is input from the operation unit 190. An estimated vehicle speed at time t1 corresponding to the point of input of the stop signal is set as a second vehicle speed V2. In the assist control according to the embodiment, driving of the electric motor 61 is controlled so that when the elapsed time from time t1 corresponding to the point of input of the signal reaches a prescribed first period T1, the estimated vehicle speed of the battery-assisted bicycle 1 changes from the second vehicle speed V2 to a first vehicle speed V1. An estimated acceleration that represents a change rate in the estimate vehicle speed of the battery-assisted bicycle is set to a constant negative value. The electric motor 61 is stopped at time t2 when the elapsed time from time t1 corresponding to the point of input of the stop signal reaches the prescribed first period T1.

### Advantages of First Embodiment

In the assist control in the battery-assisted bicycle 1 according to the embodiment, the operation unit 190 is operated to give assist stop instruction and the control to stop the assist is carried out accordingly while the battery-assisted bicycle 1 moves by driving force by the electric motor 61 with no pedal effort. In the assist control according to the embodiment, the first period T1 is secured as time before the electric motor 61 stops. Therefore, the assist force is unlikely to change abruptly and the user can stably support the battery-assisted bicycle 1.

In the assist control in the battery-assisted bicycle 1 according to the embodiment, the estimated vehicle speed of the battery-assisted bicycle 1 decreases from the second vehicle speed V2 to the first vehicle speed V1 until the prescribed first period T1 elapses from the input of the operation signal. Therefore, the assist force is unlikely to change abruptly and the user can stably support the battery-assisted bicycle 1.

According to the embodiment, when the operation unit 190 is operated to give assist stop instruction, the assist control to change the estimated vehicle speed is performed instead of simply delaying stopping of the electric motor 61. Therefore, various changes in the environment in which the battery-assisted bicycle 1 is used such as different degrees of inclination of slopes can be coped with.

According to the embodiment, the length of the period until the electric motor 61 is stopped by the assist control can be set by the time setter 159. Therefore, the length of the period for carrying out the assist control can be changed depending on the environment in which the vehicle is used.

The first state determiner 150 determines whether the first state is attained based on detection results from the torque detector 57 and the motor rotation detector 68 and a vehicle speed calculated by the vehicle speed calculator 152. The first state determiner 150 determines that the first state is attained when the pedal effort is equal to or less than a prescribed value, the rotation of the electric motor 61 is equal to or more than a prescribed value, and the real vehicle speed is equal to or less than a prescribed value. Therefore, the assist control can be carried out while the battery-assisted bicycle 1 is moved with no pedal effort.

### Second Embodiment

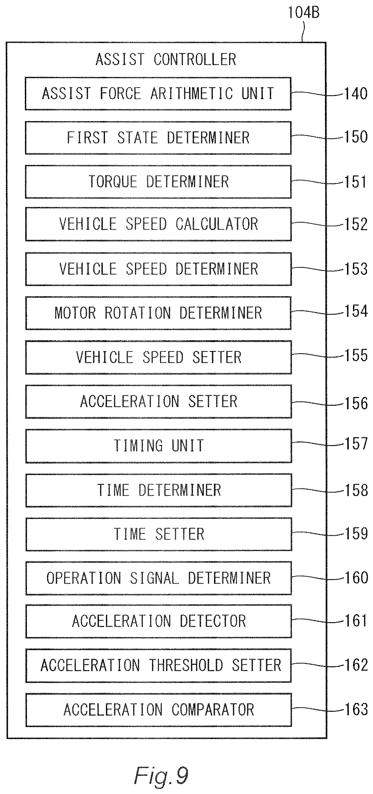

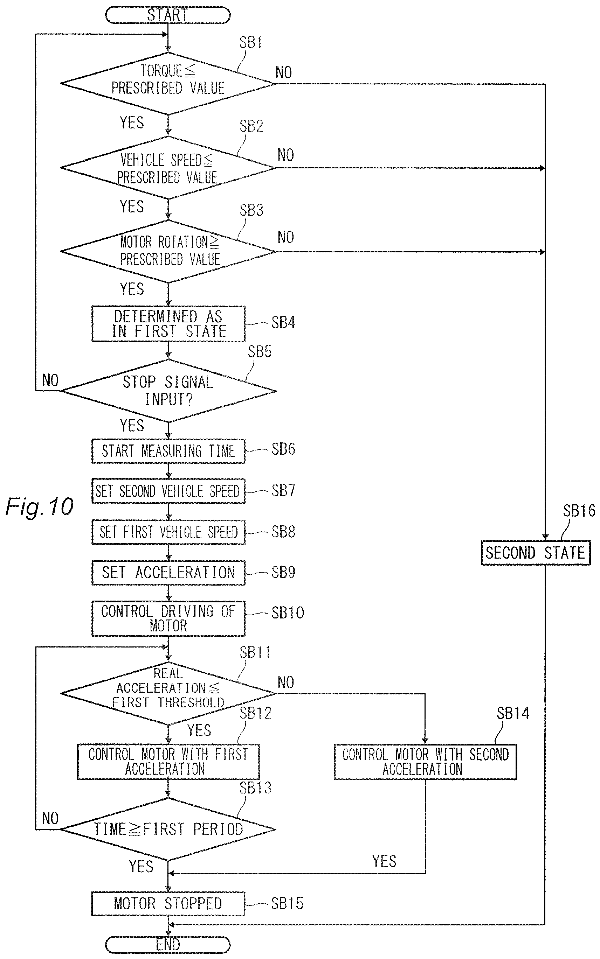

Fig. 9 is a block diagram of a general configuration of an assist controller 104B in a battery-assisted bicycle 1 according to a second embodiment. Fig. 10 is a flowchart for illustrating assist control in the battery-assisted bicycle 1 according to the second embodiment. The assist control flow according to the second embodiment is different from the assist control flow according to the first embodiment in that until the elapsed time from the point of input of an operation signal reaches a first period, a real acceleration detected by an acceleration detector 161 and a first threshold as a threshold for real positive accelerations are compared by an acceleration comparator 163. In the following description, the same elements as those according to the first embodiment will be designated by the same reference characters and will not be described while only different elements from the first embodiment will be described.

Steps SB1 to SB8 and SB16 in the assist control flow in Fig. 10 are the same as steps SA1 to SA8 and SA12 in the assist control flow in Fig. 7 according to the first embodiment. Therefore, SB1 to SB8 and SB16 will not be described in detail.

As shown in Fig. 9, an assist controller 104B includes an assist force arithmetic unit 140, a first state determiner 150, a torque determiner 151, a vehicle speed calculator 152, a vehicle speed determiner 153, a motor rotation determiner 154, a vehicle speed setter 155, an acceleration setter 156, a timing unit 157, a time determiner 158, a time setter 159, an operation signal determiner 160, the acceleration detector 161, an acceleration threshold setter 162, and the acceleration comparator 163.

The acceleration setter 156 sets an estimated acceleration as a change rate in the estimated vehicle speed of the battery-assisted bicycle 1 to a prescribed value. The estimated acceleration set by the acceleration setter 156 is a prescribed negative value or zero. The estimated acceleration is set to a prescribed negative value or zero so that the estimated vehicle speed of the battery-assisted bicycle 1 can be prevented from increasing in the assist control.

The acceleration detector 161 detects a real acceleration as a change rate in the real vehicle speed of the battery-assisted bicycle 1. More specifically, the real acceleration of the battery-assisted bicycle 1 is detected based on change in the real vehicle speed of the battery-assisted bicycle 1 calculated by the vehicle speed calculator 152.

The acceleration threshold setter 162 sets a first threshold as a threshold for real positive accelerations. The first threshold is a real acceleration value of the battery-assisted bicycle 1 for example when the battery-assisted bicycle 1 approaches a downward slope while the assist control is performed.

The acceleration comparator 163 compares the real acceleration detected by the acceleration detector 161 and the first threshold as the threshold for real positive accelerations until the elapsed time from the point of input of the operation signal reaches the first period.

### Assist Control Flow

Now, the assist control carried out in the battery-assisted bicycle 1 having the above-described structure to assist the movement of the battery-assisted bicycle 1 will be described by referring to the flow in Fig. 10.

As the assist control flow as shown in Fig. 10 starts (START), steps SB1 to SB8 are performed. In step SB9, the acceleration setter 156 sets first and second accelerations as change rates in the estimated vehicle speed of the battery-assisted bicycle 1. The first acceleration is an estimated acceleration when the estimated vehicle speed of the battery-assisted bicycle changes from a second vehicle speed to a first vehicle speed. The second acceleration is less than the first acceleration.

In step SB10, the assist force arithmetic unit 140 produces driving force by the electric motor 61 so that the estimated vehicle speed of the battery-assisted bicycle 1 changes from the second vehicle speed to the first vehicle speed when the elapsed time from the point of input of a stop signal reaches a prescribed first period.

More specifically, the assist force arithmetic unit 140 produces the driving force by the electric motor 61 using feedback control so that the estimated vehicle speed calculated by the vehicle speed calculator 152 changes from the second vehicle speed to the first vehicle speed with the first acceleration when the elapsed time from the point of input of the stop signal reaches the prescribed first period. The motor controller 105 controls driving of the electric motor 61 so that the electric motor 61 outputs the driving force produced by the assist force arithmetic unit 140.

In step SB11, the acceleration comparator 163 compares the real acceleration detected by the acceleration detector 161 and the first threshold as the threshold for real positive accelerations until the elapsed time from the point of input of the operation signal reaches the first period.

If it is determined in step SB11 that the real acceleration detected by the acceleration detector 161 is equal to or less than the first threshold (YES), the control proceeds to step SB12. In step SB12, the assist force arithmetic unit 140 produces driving force by the electric motor 61 so that the estimated speed continues to change with the first acceleration. The motor controller 105 controls driving of the electric motor 61 so that the electric motor 61 outputs the driving force produced by the assist force arithmetic unit 140.

The time determiner 158 determines in step SB13 whether the elapsed time from the point of input of the stop signal has reached the prescribed first period.

If the time determiner 158 determines in step SB13 that the elapsed time from the point of input of the stop signal has reached the prescribed first period (YES), the motor controller 105 stops the electric motor 61 in step SB15 according to the driving force produced by the assist force arithmetic unit 140. On the other hand, if the time determiner 158 determines that the elapsed time from the point of input of the stop signal has not reached the prescribed first period (NO), the control returns to step SB11.

On the other hand, if the control proceeds from step SB10 to step SB11 and the real acceleration detected by the acceleration detector 161 is more than the first threshold (NO), the control proceeds to step SB14. In step SB14, the assist force arithmetic unit 140 calculates driving force by the electric motor 61 using feedback control until the estimated vehicle speed calculated by the vehicle speed calculator 152 changes with the second acceleration and reaches zero. The motor controller 105 controls driving of the electric motor 61 so that the electric motor 61 outputs the driving force produced by the assist force arithmetic unit 140.

The electric motor 61 is stopped in step SB15 and this ends the assist control (END). More specifically, if it is determined in step SB11 that the real acceleration detected by the acceleration detector 161 is more than the first threshold (NO), the electric motor 61 stops before the elapsed time from the point of input of the stop signal reaches the first period.

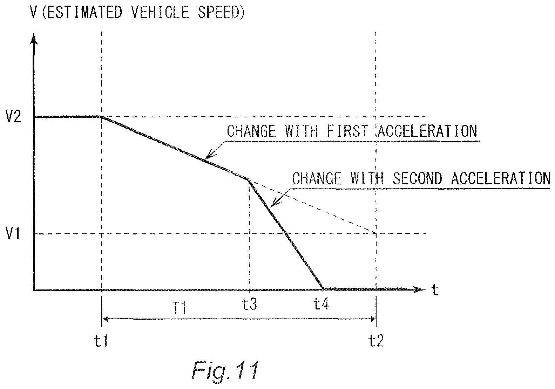

Fig. 11 is a graph showing changes in the estimated vehicle speed in the assist control in the battery-assisted bicycle according to the second embodiment. The abscissa represents time t and the ordinate represents estimated vehicle speed V. Assume that at time t1, the first state determiner 150 determines that the battery-assisted bicycle 1 is in the first state and the stop signal is input from the operation unit 190. The estimated vehicle speed at time t1 corresponding to the point of input of the stop signal is set as a second vehicle speed V2. In the assist control according to the embodiment, driving of the electric motor 61 is controlled so that the estimated vehicle speed of the battery-assisted bicycle 1 changes from the second vehicle speed V2 to a first vehicle speed V1 when the elapsed time from time t1 corresponding to the point of input of the stop signal reaches a prescribed first period T1. The estimated acceleration of the battery-assisted bicycle 1 is set to the first acceleration. Assume that it is determined that the real acceleration of the battery-assisted bicycle 1 is more than the first threshold at time t3, the estimated acceleration of the battery-assisted bicycle 1 is changed to the second acceleration that is less than the first acceleration. According to the embodiment, the estimated speed V of the battery-assisted bicycle 1 changes with the second acceleration until the estimated speed V reaches zero. At time t4, the estimated speed V reaches zero and the electric motor 61 stops. More specifically, the assist control ends at time t4 before the elapsed time from time t1 corresponding to the point of input of the stop signal reaches the first period T1.

### Advantages of Second Embodiment

In the battery-assisted bicycle 1 according to the embodiment, when the battery-assisted bicycle 1 accelerates and it is determined that the real acceleration is more than the first threshold, driving of the electric motor 61 is controlled so that the assist force is reduced. The battery-assisted bicycle 1 accelerates and the real acceleration exceeds the first threshold for example when the vehicle approaches a downward slope. If for example the battery-assisted bicycle 1 approaches a downward slope and its real acceleration increases, the assist force is reduced. In this way, the user can stably support the battery-assisted bicycle 1.

According to the embodiment, if the real acceleration detected by the acceleration detector 161 is more than the first threshold, the electric motor 61 is stopped before the elapsed time from the point of input of the operation signal reaches the first period T1. If the real acceleration detected by the acceleration detector 161 is high, the assist force is reduced in a short time, so that the real acceleration of the battery-assisted bicycle can be prevented from increasing. Therefore, the user can stably support the battery-assisted bicycle 1.

### Third Embodiment

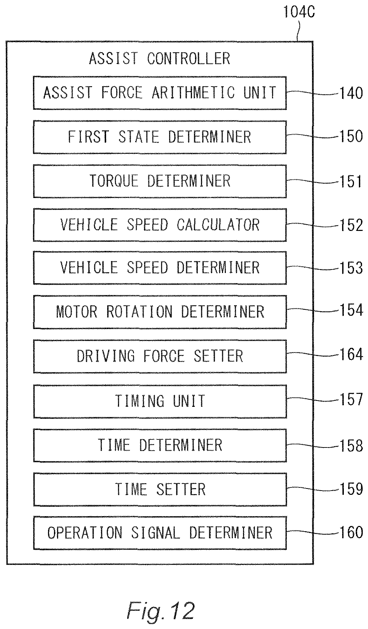

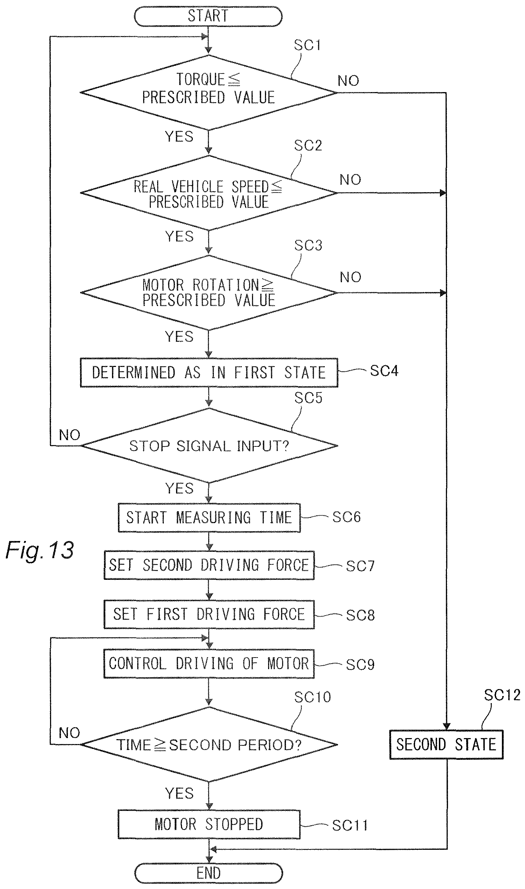

Fig. 12 is a block diagram of a general configuration of an assist controller 104C in a battery-assisted bicycle 1 according to a third embodiment. Fig. 13 is a flowchart for illustrating assist control in the battery-assisted bicycle 1 according to the third embodiment. The assist control flow according to the third embodiment is different from the assist control flow according to the first embodiment in that a driving force setter 164 sets first driving force and second driving force. In the following description, the same elements as those according to the first embodiment will be designated by the same reference characters and will not be described while only different elements from the first embodiment will be described.

Steps SC1 to SC6 and SC12 in the assist control flow in Fig. 13 are the same as steps SA1 to SA6 and SA12 in the assist control flow in Fig. 7 according to the first embodiment. Therefore, steps SC1 to SC6 and SC12 will not be described in detail.

As shown in Fig. 12, the assist controller 104C includes an assist force arithmetic unit 140, a first state determiner 150, a torque determiner 151, a vehicle speed calculator 152, a vehicle speed determiner 153, a motor rotation determiner 154, the driving force setter 164, a timing unit 157, a time determiner 158, a time setter 159, and an operation signal determiner 160.

If the first state determiner 150 determines that the battery-assisted bicycle 1 is in the first state and a stop signal is input from the operation unit 190, the driving force setter 164 sets driving force by the electric motor 61 at the point corresponding to the input of the stop signal as the second driving force. The driving force setter also sets the first driving force equal to or less than the second driving force as target driving force to be achieved when the elapsed time from the point of input of the stop signal reaches a second period. The driving force setter 164 sets the first driving force equal to or less than the second driving force in order to maintain or reduce the assist force by the battery-assisted bicycle 1 in the assist control.

### Assist Control Flow

Now, the assist control carried out in the battery-assisted bicycle 1 having the above described structure to assist the movement of the battery-assisted bicycle 1 will be described by referring to the flow in Fig. 13.

As the assist control flow as shown in Fig. 13 starts (START), steps SC1 to SC6 are performed. In step SC7, the driving force setter 164 sets driving force by the electric motor 61 at the point corresponding to the input of the stop signal as the second driving force. In step SC8, the driving force setter 164 sets the first driving force equal to or less than the second driving force as target driving force to be achieved when the elapsed time from the point of input of the stop signal from the operation unit 190 reaches the prescribed second period. According to the embodiment, the first driving force is set lower than the second driving force.

In step SC9, the assist force arithmetic unit 140 produces driving force by the electric motor 61 so that the driving force by the electric motor 61 changes from the second driving force to the first driving force when the elapsed time from the point of input of the stop signal reaches the prescribed second period. The motor controller 105 controls driving of the electric motor 61 so that the electric motor 61 outputs the driving force produced by the assist force arithmetic unit 140.

In step SC10, the time determiner 158 determines whether the elapsed time from the point of input of the stop signal has reached the prescribed second period.

If the time determiner 158 determines in step SC10 that the elapsed time from the point of input of the stop signal has reached the prescribed second period (YES), the motor controller 105 stops the electric motor 61 in step SC11 according to the driving force produced by the assist force arithmetic unit 140. On the other hand, if the time determiner 158 determines that the elapsed time from the point of input of the stop signal has not reached the prescribed second period (NO), the control returns to step SC9 and continues to control driving of the electric motor 61.

The electric motor 61 is stopped in step SC11 and this ends the assist control (END).

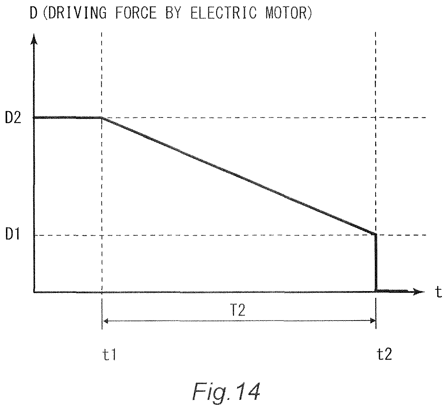

Fig. 14 is a graph showing changes in the driving force in the assist control in the battery-assisted bicycle 1 according to the third embodiment. The abscissa represents time t and the ordinate represents driving force D by the electric motor 61. Assume that at time t1, the first state determiner 150 determines that the battery-assisted bicycle 1 is in the first state and a stop signal is input from the operation unit 190. Driving force by the electric motor 61 at time t1 corresponding to the point of input of the stop signal is set as second driving force D2. In the assist control according to the embodiment, when the time elapsed from time t1 corresponding to the point of input of the stop signal has reached a prescribed second period T2, driving of the electric motor 61 is controlled so that the driving force by the electric motor 61 changes from the second driving force D2 to first driving force D1. The change rate in the driving force by the electric motor 61 is set to a constant negative value. The electric motor 61 is stopped at time t2 at which the elapsed time from the time t1 corresponding to the point of input of the stop signal reaches the prescribed second period T2.

### Advantages of Third Embodiment

In the battery-assisted bicycle 1 according to the embodiment, the operation unit 190 is operated to give assist stop instruction and the control to stop the assist is carried out while the battery-assisted bicycle 1 moves by driving force by the electric motor 61 with no pedal effort. In the assist control according to the embodiment, the second period T2 is secured as time before the electric motor 61 is stopped. Therefore, the assist force is unlikely to change abruptly and the user can stably support the battery-assisted bicycle 1.

In the assist control in the battery-assisted bicycle 1 according to the embodiment, the driving force by the electric motor 61 decreases from the second driving force D2 to the first driving force D1 until the prescribed second period T2 elapses from the point of input of the operation signal. Therefore, the assist force is unlikely to change abruptly and the user can stably support the battery-assisted bicycle 1.

According to the embodiment, when the operation unit 190 is operated to give assist stop instruction, the assist control is carried out to change the driving force by the electric motor 61 instead of simply delaying stopping of the electric motor 61. Therefore, various changes in the environment in which the battery-assisted bicycle 1 is used such as different degrees of inclination of slopes can be coped with.

### Fourth Embodiment

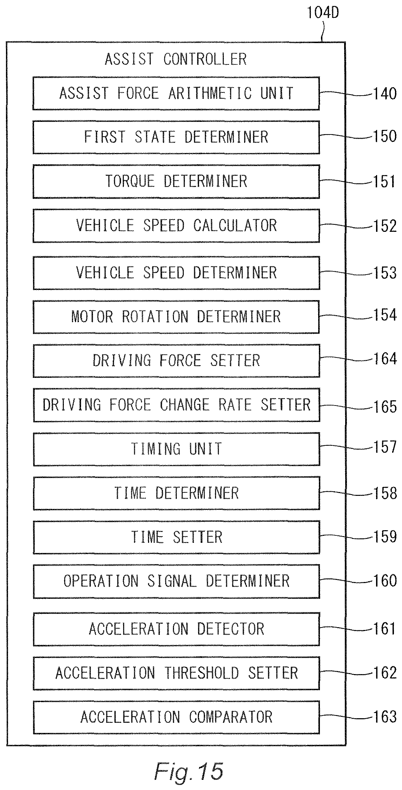

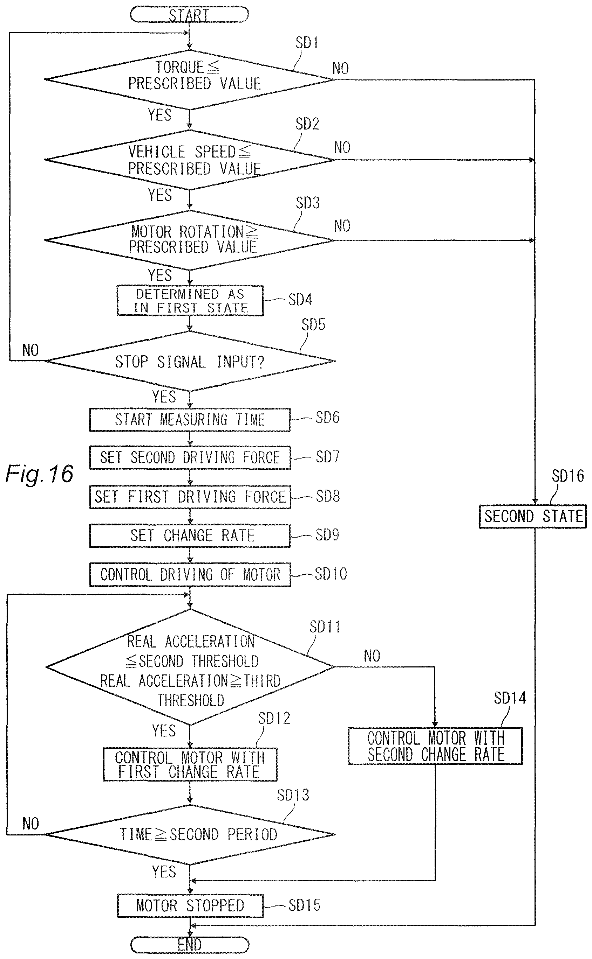

Fig. 15 is a block diagram of a general configuration of an assist controller 104D in a battery-assisted bicycle 1 according to a fourth embodiment. Fig. 16 is a flowchart for illustrating assist control in the battery-assisted bicycle 1 according to the fourth embodiment. The assist control flow according to the fourth embodiment is different from the assist control according to the first embodiment in that until the elapsed time from when an operation signal is input reaches a second period, an acceleration comparator 163 compares a real acceleration detected by an acceleration detector 161 to a second threshold as a threshold for real positive accelerations and a third threshold as a threshold for real negative accelerations. In the following description, the same elements as those according to the first embodiment will be designated by the same reference characters and will not be described while only different elements from the first embodiment will be described.

Steps SD1 to SD6 and SD16 in the assist control flow shown in Fig. 16 are the same as steps SA1 to SA6 and SA12 in the assist control flow shown in Fig. 7 according to the first embodiment. Therefore, steps SD1 to SD6 and SD16 will not be described in detail.

As shown in Fig. 15, an assist controller 104D includes an assist force arithmetic unit 140, a first state determiner 150, a torque determiner 151, a vehicle speed calculator 152, a vehicle speed determiner 153, a motor rotation determiner 154, a driving force setter 164, a driving force change rate setter 165, a timing unit 157, a time determiner 158, a time setter 159, an operation signal determiner 160, the acceleration detector 161, an acceleration threshold setter 162, and the acceleration comparator 163.

The driving force change rate setter 165 sets a driving force change rate as a change rate in the driving force by the electric motor 61 to a prescribed value. The driving force change rate set by the driving force change rate setter 165 is a prescribed negative value or zero. The assist force by the battery-assisted bicycle 1 can be prevented from increasing in the assist control by setting the driving force change rate to a prescribed negative value or zero.

The acceleration detector 161 detects a real acceleration as a change rate in the real vehicle speed of the battery-assisted bicycle 1. More specifically, the real acceleration of the battery-assisted bicycle 1 can be detected based on changes in the real vehicle speed of the battery-assisted bicycle 1 calculated by the vehicle speed calculator 152.

The acceleration threshold setter 162 sets a second threshold as a threshold for real positive accelerations and a third threshold as a threshold for real negative accelerations. The second threshold is for example a real acceleration value of battery-assisted bicycle 1 when the battery-assisted bicycle 1 approaches a downward slope during the assist control. The third threshold is a real acceleration value of the battery-assisted bicycle 1 for example when the brake is applied while the assist control is performed.

The acceleration comparator 163 compares the real acceleration detected by the acceleration detector 161 to the second threshold as the threshold for real positive accelerations and the third threshold as the threshold for real negative accelerations until the elapsed time from the point of input of the operation signal reaches the second period.

### Assist Control Flow

Now, the assist control carried out in the battery-assisted bicycle 1 having the above-described structure to assist the movement of the battery-assisted bicycle 1 will be described by referring to the flow in Fig. 16.

As the assist control flow in Fig. 16 starts (START), steps SD1 to SD6 are carried out. In step SD7, the driving force setter 164 sets driving force by the electric motor 61 at the point when a stop signal is input as second driving force. In step SD8, the driving force setter 164 sets first driving force as target driving force to be achieved when the elapsed time from the point of input of the stop signal from the operation unit 190 reaches the prescribed second period. The first driving force is less than the second driving force.

In step SD9, the driving force change rate setter 165 sets a first change rate and a second change rate as change rates in the driving force by the electric motor 61. The first change rate is a change rate in the driving force when the driving force by the electric motor 61 changes from the second driving force to the first driving force. The first change rate is a negative value. The second change rate is less than the first change rate. The second change rate is also a negative value.

In step SD10, the assist force arithmetic unit 140 produces driving force by the electric motor 61 so that the driving force by the electric motor 61 changes from the second driving force to the first driving force when the elapsed time from the point of input of the stop signal reaches the prescribed second period. The motor controller 105 controls driving of the electric motor 61 so that the electric motor 61 outputs the driving force produced by the assist force arithmetic unit 140.

In step SD11, the acceleration comparator 163 compares the real acceleration detected by the acceleration detector 161 to the second threshold as the threshold for real positive accelerations and the third threshold as the threshold for real negative accelerations until the elapsed time from the point of input of the operation signal reaches the second period.

In step SD11, if the real acceleration detected by the acceleration detector 161 is equal to or less than the second threshold and equal to or more than the third threshold (YES), the control proceeds to step SD12. In step SD12, the assist force arithmetic unit 140 produces driving force by the electric motor 61 still at the first change rate. The motor controller 105 controls driving of the electric motor 61 so that the electric motor 61 outputs the driving force produced by the assist force arithmetic unit 140.

In step SD13, the time determiner 158 determines whether the elapsed time from the point of input of the stop signal has reached the prescribed second period.

In step SD13, if the time determiner 158 determines that the elapsed time from the point of input of the stop signal has reached the prescribed second period (YES), the motor controller 105 stops the electric motor 61 in step SD15 according to the driving force produced by the assist force arithmetic unit 140. On the other hand, if the time determiner 158 determines that the elapsed time from the point of input of the stop signal has not reached the prescribed second period (NO), the control returns to step SD11.

On the other hand, if the control proceeds from step SD10 to step SD11 and the real acceleration detected by the acceleration detector 161 is more than the second threshold or less than the third threshold (NO), the control proceeds to step SD14. In step SD14, the assist force arithmetic unit 140 continues to produce driving force by the electric motor 61 until the driving force by the electric motor 61 changes at the second change rate and reaches zero. The motor controller 105 controls driving of the electric motor 61 so that the electric motor 61 outputs the driving force produced by the assist force arithmetic unit 140.

In step SD15, the electric motor 61 is stopped and this ends the assist control (END). More specifically, if the real acceleration detected by the acceleration detector 161 is more than the second threshold or less than the third threshold (NO) in step SD11, the electric motor 61 stops before the elapsed time from the point of input of the stop signal reaches the second period.

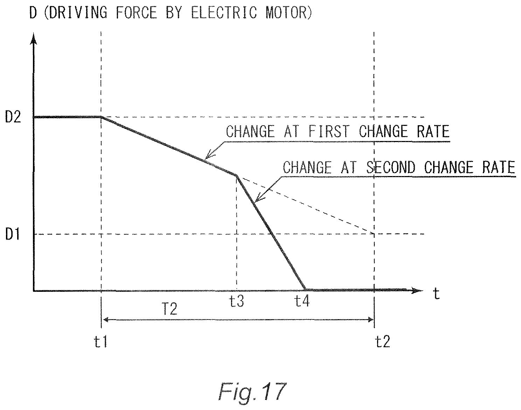

Fig. 17 is a graph showing changes in the driving force in the assist control in the battery-assisted bicycle 1 according to the fourth embodiment. The abscissa represents time t and the ordinate represents driving force D by the electric motor 61. Assume that at time t1, the first state determiner 150 determines that the battery-assisted bicycle 1 is in the first state and a stop signal is input from the operation unit 190. The driving force by the electric motor 61 at time t1 at which the stop signal is input is set as second driving force D2. In the assist control according to the embodiment, driving of the electric motor 61 is controlled so that the driving force by the electric motor 61 changes from the second driving force D2 to first driving force D1 when the elapsed time from time t1 corresponding to the point of input of the stop signal reaches a prescribed second period T2. The change rate in the driving force by the electric motor 61 is set to the first change rate that is a constant negative value. If it is determined that at time t3, the acceleration of the battery-assisted bicycle 1 is more than the second threshold or less than the third threshold, the change rate in the driving force by the electric motor 61 is changed to the second change rate that is less than the first change rate. According to the embodiment, the driving force D by the electric motor 61 continues to change at the second change rate until the driving force D reaches zero. At time t4, the driving force D by the electric motor 61 reaches zero and the electric motor 61 stops. More specifically, the assist control ends at time t4 before the elapsed time from time t1 corresponding to the point of input of the stop signal reaches the second period T2.

### Advantages of Fourth Embodiment

In the battery-assisted bicycle 1 according to the embodiment, driving of the electric motor 61 is controlled to reduce the assist force if the real acceleration of the battery-assisted bicycle 1 is more than the second threshold as the threshold for real positive accelerations or less than the third threshold as the threshold for real negative accelerations. The real acceleration of the battery-assisted bicycle 1 is more than the second threshold for example when the vehicle approaches a downward slope. The real acceleration of the battery-assisted bicycle 1 is less than the third threshold for example when the brake is applied and the battery-assisted bicycle 1 slows down. The assist force is reduced for example when the real acceleration increases as the vehicle approaches a downward slope or when the brake is applied and the real acceleration is reduced. In this way, the user can stably support the battery-assisted bicycle 1.

According to the embodiment, if the real acceleration detected by the acceleration detector 161 is more than the second threshold as the threshold for real positive accelerations or less than the third threshold as the threshold for real negative accelerations, the electric motor 61 is stopped before the elapsed time from the point of input of the operation signal reaches the second period T2. The assist force is reduced in a short time when the real acceleration detected by the acceleration detector 161 is more than the second threshold or less than the third threshold, so that increase in the real acceleration of the battery-assisted bicycle can be suppressed. In this way, the user can stably support the battery-assisted bicycle 1.

### Fifth Embodiment

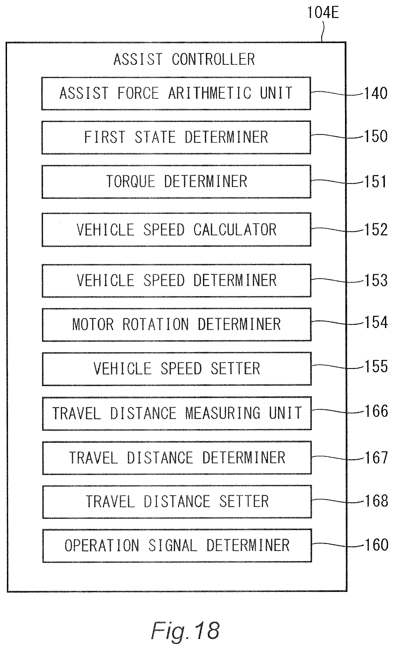

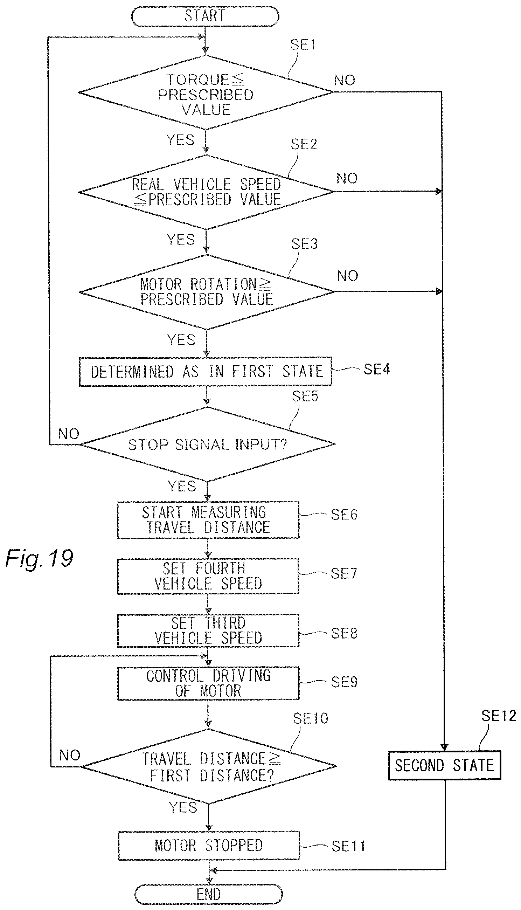

Fig. 18 is a block diagram of a general configuration of an assist controller 104E in a battery-assisted bicycle 1 according to a fifth embodiment. Fig. 19 is a flowchart for illustrating assist control in the battery-assisted bicycle 1 according to the fifth embodiment. The assist control flow according to the fifth embodiment is different from the assist control flow according to the first embodiment in that when a stop signal is input from an operation unit 190, a travel distance determiner 167 determines whether the travel distance from the point where the stop signal is input reaches a first distance. In the following description, the same elements as those according to the first embodiment will be designated by the same reference characters and will not be described while only different elements from the first embodiment will be described.

Steps SE1 to SE5 and SE12 in the assist control flow in Fig. 19 are the same as steps SA1 to SA5 and SA12 in the assist control flow shown in Fig. 7 according to the first embodiment. Therefore, steps SE1 to SE5 and SE12 will not be described in detail.

As shown in Fig. 18, the assist controller 104E includes an assist force arithmetic unit 140, a first state determiner 150, a torque determiner 151, a vehicle speed calculator 152, a vehicle speed determiner 153, a motor rotation determiner 154, a vehicle speed setter 155, a travel distance measuring unit 166, the travel distance determiner 167, a travel distance setter 168, and an operation signal determiner 160.

If the first state determiner 150 determines that the battery-assisted bicycle 1 is in the first state and a stop signal is input from the operation unit 190, the vehicle speed setter 155 sets an estimated vehicle speed of the battery-assisted bicycle 1 at the point corresponding to the input of the stop signal as a fourth vehicle speed. A third vehicle speed that is an estimated vehicle speed equal to or less than the fourth vehicle speed is set as a target vehicle speed to be achieved when the travel distance from the point of input of the stop signal reaches a prescribed first distance. The third vehicle speed equal to or less than the fourth vehicle speed is set by the vehicle speed setter 155 in order to maintain or reduce assist force by the battery-assisted bicycle 1 in the assist control.

If the first state determiner 150 determines that the battery-assisted bicycle 1 is in the first state and the stop signal is input from the operation unit 190, the travel distance measuring unit 166 measures the travel distance from the point of input of the stop signal.

If the stop signal is input from the operation unit 190, the travel distance determiner 167 determines whether the travel distance from the point of input of the stop signal has reached the first distance.

If the stop signal is input from the operation unit 190, the travel distance setter 168 sets the length of the travel distance from the point of input of the stop signal until the electric motor 61 is stopped as the first distance. Depending on the environment in which the battery-assisted bicycle 1 is used, the length of the travel distance from the point of input of the stop signal until the electric motor 61 is stopped may be set to a different distance from the first distance.

### Assist Control Flow

Now, the assist control carried out in the battery-assisted bicycle 1 having the above-described structure to assist the movement of the battery-assisted bicycle 1 will be described by referring to the flow in Fig. 19.

As the assist control flow as shown in Fig. 19 starts (START), steps SE1 to SE5 are carried out. In step SE6, the travel distance measuring unit 166 starts to measure the travel distance from the point of input of the stop signal.

In step SE7, an estimated vehicle speed at the point where a stop signal is input is set as a fourth vehicle speed by the vehicle speed setter 155.

In step SE8, the vehicle speed setter 155 sets the third vehicle speed that is an estimated vehicle speed equal to or lower than the fourth vehicle speed. According to the embodiment, the third vehicle speed is set lower than the fourth vehicle speed.

In step SE9, the assist force arithmetic unit 140 produces driving force by the electric motor 61 so that the estimated vehicle speed of the battery-assisted bicycle 1 changes from the fourth vehicle speed to the third vehicle speed.

More specifically, the assist force arithmetic unit 140 produces driving force by the electric motor 61 using feedback so that the estimated vehicle speed calculated by the vehicle speed calculator 152 changes from the fourth vehicle speed to the third vehicle speed when the travel distance from the point of input of the stop signal reaches the prescribed first distance. The motor controller 105 controls driving of the electric motor 61 so that the electric motor 61 outputs the driving force produced by the assist force arithmetic unit 140.

In step SE10, the travel distance determiner 167 determines whether the travel distance from the point of input of the stop signal has reached the prescribed first distance.

If the travel distance determiner 167 determines in step SE10 that the travel distance from the point of input of the stop signal has reached the prescribed first distance (YES), the motor controller 105 stops the electric motor 61 in step SE11 according to the driving force produced by the assist force arithmetic unit 140.

On the other hand, if the travel distance determiner 167 determines that the travel distance from the point of input of the stop signal has not reached the prescribed first distance (NO), the control returns to step SE9 and continues to control driving of the electric motor 61.

In step SE11, the electric motor 61 is stopped and this ends the assist control (END).

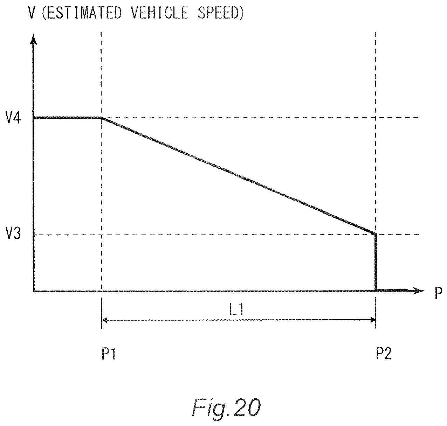

Fig. 20 is a graph showing changes in the estimated vehicle speed in the assist control in the battery-assisted bicycle 1 according to the fifth embodiment. The abscissa represents position P and the ordinate represents estimated vehicle speed V. Assume that the first state determiner 150 determines that the battery-assisted bicycle 1 is in the first state and a stop signal is input from the operation unit 190 in position P1. The estimated vehicle speed in position P1 at the point corresponding to the input of the stop signal is set as a fourth vehicle speed V4. In the assist control according to the embodiment, driving of the electric motor 61 is controlled so that the estimated vehicle speed of the battery-assisted bicycle 1 changes from the fourth vehicle speed V4 to a third vehicle speed V3 when the travel distance from position P1 corresponding to the point of input of the stop signal reaches a prescribed first distance L1. The acceleration of the battery-assisted bicycle 1 is set to a constant negative value. The electric motor 61 is stopped in position P2 where the travel distance from position P1 corresponding to the point of input of the stop signal reaches the prescribed first distance L1.

### Advantages of Fifth Embodiment

In the battery-assisted bicycle 1 according to the embodiment, the operation unit 190 is operated to give assist stop instruction and the control to stop the assist is performed accordingly while the battery-assisted bicycle 1 moves by driving force by the electric motor 61 with no pedal effort. In the assist control according to the embodiment, the first distance L1 is secured as the travel distance before the electric motor 61 is stopped. Therefore, the assist force is unlikely to change abruptly and the user can stably support the battery-assisted bicycle 1.

In the assist control in the battery-assisted bicycle 1 according to the embodiment, the estimated vehicle speed of the battery-assisted bicycle 1 decreases from the fourth vehicle speed V4 to the third vehicle speed V3 until the prescribed first distance L1 is reached from the point of input of the operation signal. In this way, the user can stably support the battery-assisted bicycle 1.

According to the embodiment, when the operation unit 190 is operated to give assist stop instruction, the assist control is carried out to change the estimated vehicle speed instead of simply delaying stopping of the electric motor 61. Therefore, various changes in the environment in which the battery-assisted bicycle 1 is used such as different degrees of inclination of slopes can be coped with.

According to the embodiment, the travel distance before the electric motor 61 is stopped by the assist control can be set by the distance setter. In this way, the travel distance for which the assist control is carried out can be changed depending on the environment in which the vehicle is used.

### Sixth Embodiment

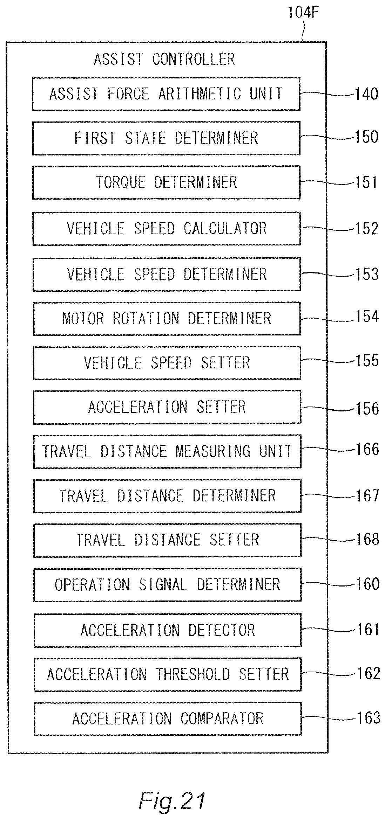

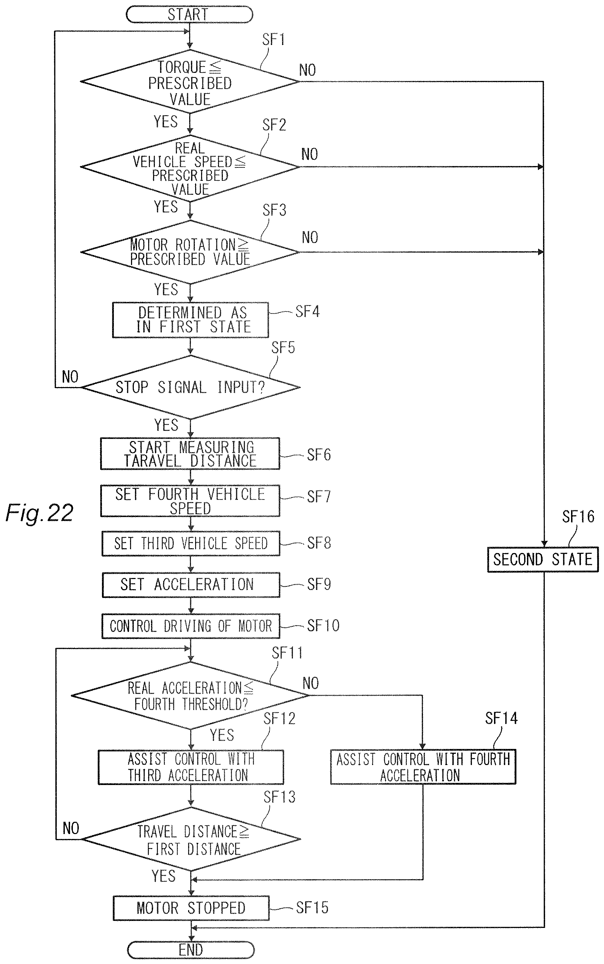

Fig. 21 is a block diagram of a general configuration of an assist controller 104F in a battery-assisted bicycle 1 according to a sixth embodiment. Fig. 22 is a flowchart for illustrating assist control in the battery-assisted bicycle 1 according to the sixth embodiment. The assist control flow according to the sixth embodiment is different from the assist control flow according to the first embodiment in that an acceleration comparator 163 compares a real acceleration detected by an acceleration detector 161 and a fourth threshold as a threshold for real positive accelerations until the travel distance from the point where an operation signal is input reaches a first distance. In the following description, the same elements as those according to the first embodiment will be designated by the same reference characters and will not be described while only different elements from the first embodiment will be described.

Steps SF1 to SF5 and SF16 in the assist control flow shown in Fig. 22 are the same as steps SA1 to SA5 and SA12 in the assist control flow shown in Fig. 7 according to the first embodiment. Therefore, steps SF1 to SF5 and SF16 will not be described in detail.

As shown in Fig. 21, the assist controller 104B includes an assist force arithmetic unit 140, a first state determiner 150, a torque determiner 151, a vehicle speed calculator 152, a vehicle speed determiner 153, a motor rotation determiner 154, a vehicle speed setter 155, an acceleration setter 156, a travel distance measuring unit 166, a travel distance determiner 167, a travel distance setter 168, an operation signal determiner 160, the acceleration detector 161, an acceleration threshold setter 162, and the acceleration comparator 163.

The acceleration threshold setter 162 sets the fourth threshold as the threshold for real positive accelerations. The fourth threshold is a real acceleration value of the battery-assisted bicycle 1 for example when the battery-assisted bicycle 1 approaches a downward slope while the assist control is performed.

The acceleration comparator 163 compares the real acceleration detected by the acceleration detector 161 and the fourth threshold as the threshold for real positive accelerations until the travel distance from the point of input of the operation signal reaches the first distance.

### Assist Control Flow

Now, the assist control carried out in the battery-assisted bicycle 1 having the above-described structure to assist the movement of the battery-assisted bicycle 1 will be described by referring to the flow in Fig. 22.

As the assist control flow as shown in Fig. 22 starts (START), steps SF1 to SF5 are carried out. In step SF6, the travel distance measuring unit 166 starts to measure the travel distance from the point where a stop signal is input.

In step SF7, the vehicle speed setter 155 sets an estimated vehicle speed at the point corresponding to the input of the stop signal as a fourth vehicle speed.

In step SF8, the vehicle speed setter 155 sets a third vehicle speed that is an estimated vehicle speed lower than the fourth vehicle speed as a target vehicle speed.

In step SF9, the acceleration setter 156 sets a third acceleration and a fourth acceleration as change rates in the estimated vehicle speed of the battery-assisted bicycle 1. The third acceleration is an estimated vehicle acceleration with which the estimated vehicle speed of the battery-assisted bicycle changes from the fourth vehicle speed to the third vehicle speed. The fourth acceleration is less than the third acceleration.

In step SF10, the assist force arithmetic unit 140 produces driving force by the electric motor 61 so that the estimated vehicle speed of the battery-assisted bicycle 1 changes from the fourth vehicle speed to the third vehicle speed when the travel distance from the point of input of the stop signal reaches the prescribed first distance.

More specifically, the assist force arithmetic unit 140 produces driving force by the electric motor 61 using feedback control so that the estimated vehicle speed calculated by the vehicle speed calculator 152 changes from the fourth vehicle speed to the third vehicle speed with the third acceleration when the travel distance from the point of input of the stop signal reaches the prescribed first distance. The motor controller 105 controls driving of the electric motor 61 so that the electric motor 61 outputs the driving force produced by the assist force arithmetic unit 140.

In step SF11, the acceleration comparator 163 compares a real acceleration detected by the acceleration detector 161 and the fourth threshold as the threshold for real positive accelerations until the travel distance from the point of input of the operation signal reaches the first distance.

If it is determined in step SF11 that the real acceleration detected by the acceleration detector 161 is equal to or less than the fourth threshold (YES), the control proceeds to step SF12. In step SF12, the assist force arithmetic unit 140 produces driving force by the electric motor 61 so that the estimated speed continues to change with the third acceleration. The motor controller 105 controls driving of the electric motor 61 so that the electric motor 61 outputs the driving force produced by the assist force arithmetic unit 140.

In step SF13, the travel distance determiner 167 determines whether the travel distance from the point of input of the stop signal has reached the prescribed first distance.

If the travel distance determiner 167 determines in step SF13 that the travel distance from the point of input of the stop signal has reached the prescribed first distance (YES), the motor controller 105 stops the electric motor 61 in step SF15 according to the driving force produced by the assist force arithmetic unit 140. On the other hand, if the travel distance determiner 167 deter
mines that the travel distance from the point of input of the stop signal has not reached the prescribed first distance (NO), the control returns to step SF11.

On the other hand, if the control proceeds from step SF10 to step SF11 and it is determined that the real acceleration detected by the acceleration detector 161 is more than the fourth threshold (NO), the control proceeds to step SF14. In step SF14, the assist force arithmetic unit 140 produces driving force by the electric motor 61 using feedback control until the estimated vehicle speed calculated by the vehicle speed calculator 152 changes with the fourth acceleration and reaches zero. The motor controller 105 controls driving of the electric motor 61 so that the electric motor 61 outputs the driving force produced by the assist force arithmetic unit 140.

The electric motor 61 is stopped in step SF15 and this ends the assist control (END). More specifically, if it is determined in step SF11 that the real acceleration detected by the acceleration detector 161 is more than the fourth threshold (NO), the electric motor 61 is stopped before the travel distance from the point of input of the stop signal reaches the first distance.

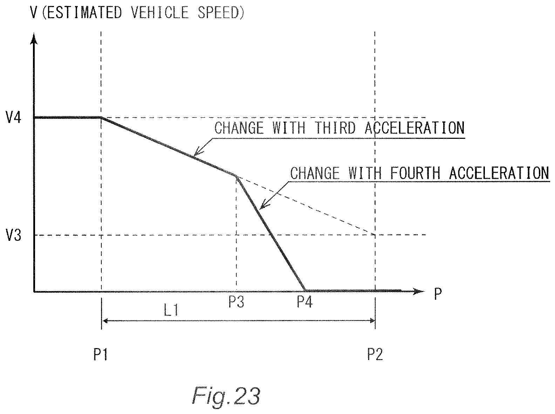

Fig. 23 is a graph showing changes in the estimated vehicle speed in the assist control in the battery-assisted bicycle 1 according to the sixth embodiment. The abscissa represents position P and the ordinate represents estimated vehicle speed V. Assume that the first state determiner 150 determines that the battery-assisted bicycle 1 is in the first state and a stop signal is input from the operation unit 190 in position P1. The estimated vehicle speed in position P1 where the stop signal is input is set as a fourth vehicle speed V4. In the assist control according to the embodiment, driving of the electric motor 61 is controlled so that the estimated vehicle speed of the battery-assisted bicycle 1 changes from the fourth vehicle speed V4 to a third vehicle speed V3 when the travel distance from position P1 corresponding to the point of input of the stop signal reaches a prescribed first distance L1. The estimated acceleration of the battery-assisted bicycle 1 is set to the third acceleration. If it is determined that the real acceleration of the battery-assisted bicycle 1 is more than the fourth threshold in position P3, the estimated acceleration of the battery-assisted bicycle 1 is changed to the fourth acceleration that is less than the third acceleration. According to the embodiment, the estimated speed V of the battery-assisted bicycle 1 continues to change with the fourth acceleration until the estimated vehicle speed V reaches zero. The estimated vehicle speed V reaches zero in position P4 and the electric motor 61 stops. More specifically, the assist control ends in position P4 before the travel distance from position P1 corresponding to the point of input of the stop signal reaches the prescribed first distance L1.

### Advantages of Sixth Embodiment

In the battery-assisted bicycle 1 according to the embodiment, if it is determined that the real acceleration is more than the fourth threshold as the battery-assisted bicycle 1 accelerates, driving of the electric motor 61 is controlled so that the assist force is reduced. The battery-assisted bicycle 1 accelerates and the real acceleration exceeds the fourth threshold for example when the vehicle approaches a downward slope. When for example the battery-assisted bicycle 1 approaches a downward slope and the real acceleration of battery-assisted bicycle 1 increases, the assist force is reduced. In this way, the user can stably assist the battery-assisted bicycle 1.

According to the embodiment, if the real acceleration detected by the acceleration detector 161 is more than the fourth threshold, the electric motor 61 is stopped before the travel distance from the point of input of the operation signal reaches the first distance L1. If the real acceleration detected by the acceleration detector 161 is high, the assist force is reduced in a short time, so that increase in the real acceleration of the battery-assisted bicycle can be suppressed. In this way, the user can stably support the battery-assisted bicycle 1.

### Seventh Embodiment

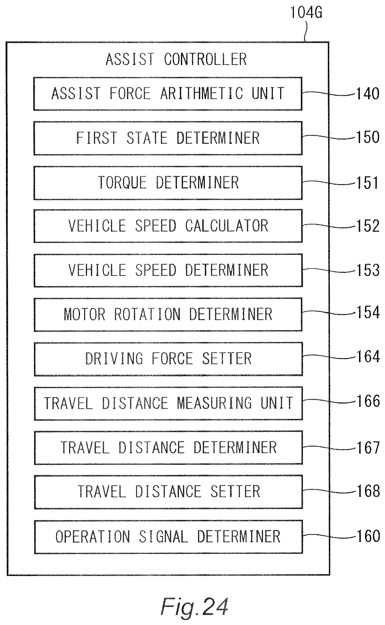

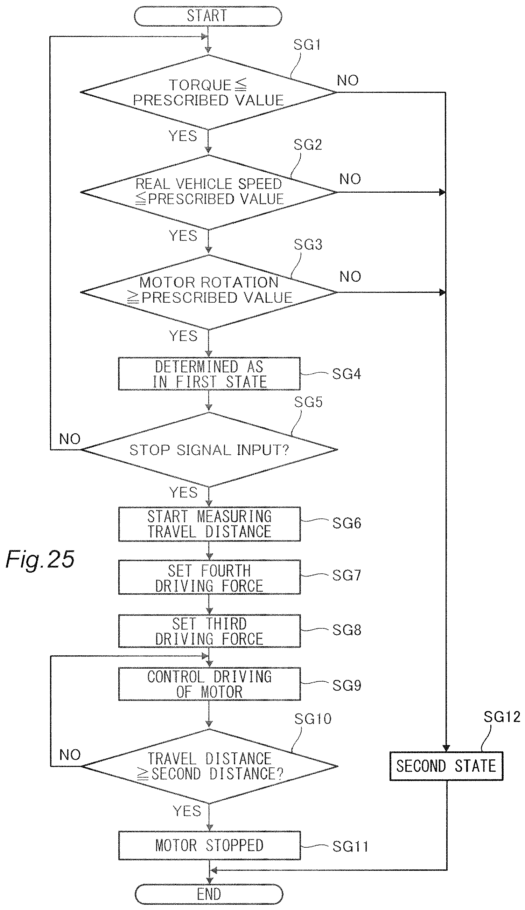

Fig. 24 is a block diagram of a general configuration of an assist controller 104G in a battery-assisted bicycle 1 according to a seventh embodiment. Fig. 25 is a flowchart for illustrating assist control in the battery-assisted bicycle 1 according to the seventh embodiment. The assist control flow according to the seventh embodiment is different from the assist control flow according to the first embodiment in that a driving force setter 164 sets third driving force and fourth driving force. In the following description, the same elements as those according to the first embodiment will be designated by the same reference characters and will not be described while only different elements from the first embodiment will be described.

Steps SG1 to SG5 and SG12 in the assist control flow in Fig. 25 are the same as steps SA1 to SA5 and SA12 in the assist control flow in Fig. 7 according to the first embodiment. Therefore, steps SG1 to SG5 and SG12 will not be described in detail.

As shown in Fig. 24, the assist controller 104G includes an assist force arithmetic unit 140, a first state determiner 150, a torque determiner 151, a vehicle speed calculator 152, a vehicle speed determiner 153, a motor rotation determiner 154, the driving force setter 164, a travel distance measuring unit 166, a travel distance determiner 167, a travel distance setter 168, and an operation signal determiner 160.

If the first state determiner 150 determines that the battery-assisted bicycle 1 is in the first state and a stop signal is input from the operation unit 190, the driving force setter 164 sets driving force by the electric motor 61 at the point corresponding to the input of the stop signal as fourth driving force. Third driving force less than the fourth driving force is set as target driving force to be achieved when the travel distance from the point of input of the stop signal reaches a prescribed second distance. The driving force setter 164 sets the third driving force less than the fourth driving force in order to reduce the assist force by the battery-assisted bicycle 1 in the assist control.

### Assist Control Flow

Now, the assist control carried out in the battery-assisted bicycle 1 having the above-described structure to assist the movement of the battery-assisted bicycle 1 will be described by referring to the flow in Fig. 25.

As the assist control flow as shown in Fig. 25 starts (START), steps SG1 to SG5 are carried out. In step SG6, the travel distance measuring unit 166 starts to measure the travel distance from the point where the stop signal is input.

In step SG7, the driving force setter 164 sets the driving force by the electric motor 61 at the point corresponding to the input of the stop signal as the fourth driving force. In step SG8, the driving force setter 164 sets the third driving force equal to or less than the fourth driving force as target driving force to be achieved when the travel distance from the point corresponding to the input of the stop signal from the operation unit 190 reaches the prescribed second distance. According to the embodiment, the third driving force is set less than the fourth driving force.

In step SG9, the assist force arithmetic unit 140 produces driving force by the electric motor 61 so that the driving force by the electric motor 61 changes from the fourth driving force to the third driving force when the travel distance from the point corresponding to the input of the stop signal reaches the prescribed second distance. The motor controller 105 controls driving of the electric motor 61 so that the electric motor 61 outputs the driving force produced by the assist force arithmetic unit 140.

In step SG10, the travel distance determiner 167 determines whether the travel distance from the point corresponding to the input of the stop signal has reached the prescribed second distance.

If the travel distance determiner 167 determines in step SG10 that the travel distance from the point corresponding to the input of the stop signal has reached the prescribed second distance (YES), the motor controller 105 stops the electric motor 61 in step SG11 according to the driving force produced by the assist force arithmetic unit 140. On the other hand, if the travel distance determiner 167 determines that the distance from the point corresponding to the input of the stop signal has not reached the second distance (NO), the control returns to step SG9 and continues to control driving of the electric motor 61.

In step SG11, the electric motor 61 is stopped and this ends the assist control (END).

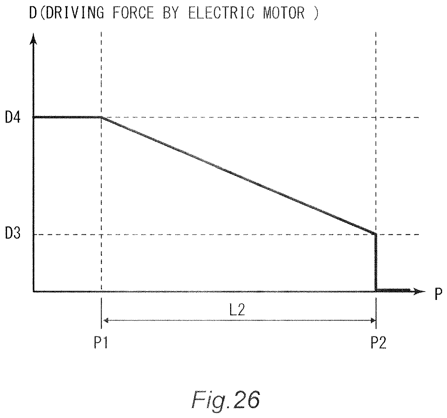

Fig. 26 is a graph showing changes in the driving force in the assist control in the battery-assisted bicycle 1 according to the seventh embodiment. The abscissa represents position P and the ordinate represents driving force D by the electric motor 61. Assume that the first state determiner 150 determines that the battery-assisted bicycle 1 is in the first state and a stop signal is input from the operation unit 190 in position P1. The driving force by the electric motor 61 in position P1 where the stop signal is input is set as fourth driving force D4. In the assist control according to the embodiment, driving of the electric motor 61 is controlled so that the driving force by the electric motor 61 changes from the fourth driving force D4 to third driving force D3 when the travel distance from position P1 corresponding to the input of the stop signal reaches a prescribed second distance L2. The change rate in the driving force by the electric motor 61 is set to a constant negative value. The electric motor 61 is stopped in position P2 where the travel distance from position P1 corresponding to the input of the stop signal reaches the prescribed second distance L2.

### Advantages of Seventh Embodiment

In the battery-assisted bicycle 1 according to the embodiment, the operation unit 190 is operated to give assist stop instruction and the control to stop the assist is carried out while the battery-assisted bicycle 1 moves by driving force by the electric motor 61 with no pedal effort. In the assist control according to the embodiment, the second distance is secured as the travel distance before the electric motor 61 is stopped. Therefore, the assist force is unlikely to change abruptly and the user can stably support the battery-assisted bicycle 1.

In the assist control in the battery-assisted bicycle 1 according to the embodiment, until a prescribed second distance L2 is reached from the point corresponding to the input of the operation signal, the driving force by the electric motor 61 decreases from the fourth driving force D4 to the third driving force D3. Therefore, the assist force is unlikely to change abruptly and the user can stably support the battery-assisted bicycle 1.

According to the embodiment, when the operation unit 190 is operated to give assist stop instruction, the assist control is carried out to change the driving force by the electric motor 61 instead of simply delaying stopping of the electric motor 61. Therefore, various changes in the environment in which the battery-assisted bicycle 1 is used such as different degrees of inclination of slopes can be coped with.

### Eighth Embodiment

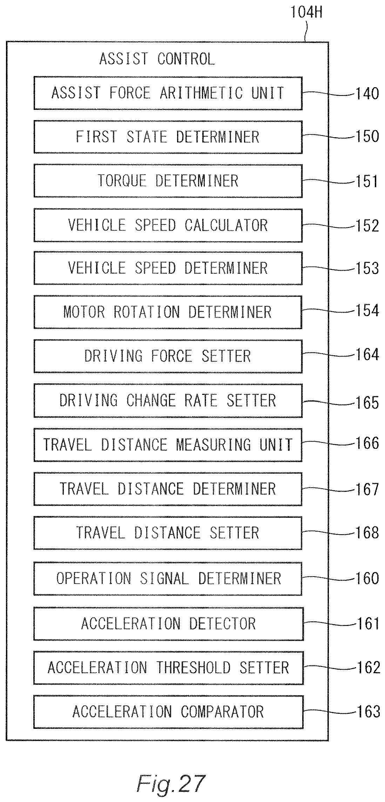

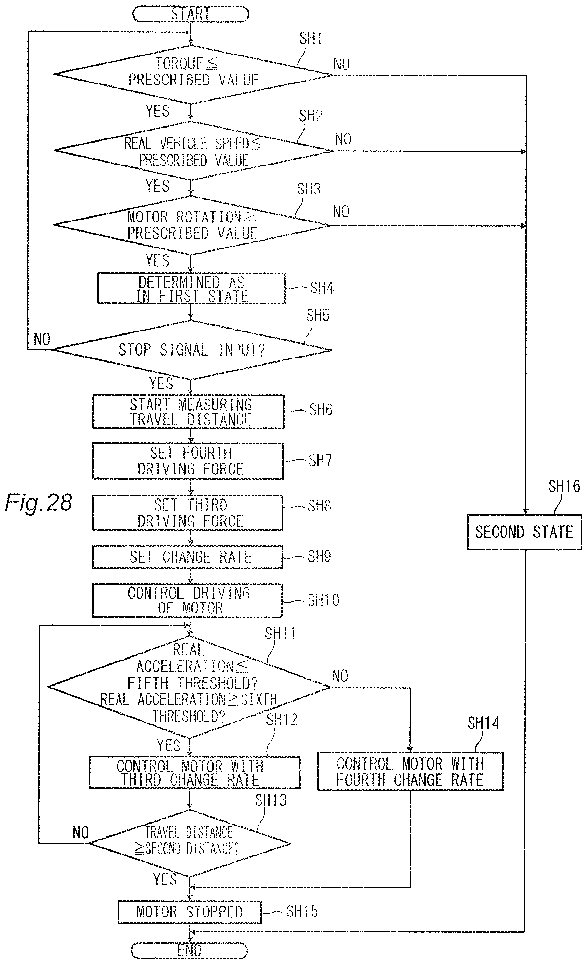

Fig. 27 is a block diagram of a general configuration of an assist controller 104H in a battery-assisted bicycle 1 according to an eighth embodiment. Fig. 28 is a flowchart for illustrating an assist control flow in the battery-assisted bicycle 1 according to the eighth embodiment. The assist control flow according to the eighth embodiment is different from the assist control flow according to the first embodiment in that an acceleration comparator 163 compares a real acceleration detected by an acceleration detector 161 to a fifth threshold as a threshold for real positive accelerations and a sixth threshold as a threshold for real negative accelerations until the travel distance from the point where an operation signal is input reaches a second distance. In the following, the same elements as those according to the first embodiment will be designated by the same reference characters and will not be described and only different elements from the first embodiment will be described.

Steps SH1 to SH5 and SH16 in the assist control flow in Fig. 28 are the same as steps SA1 to SA6 and SA12 in the assist control flow shown in Fig. 7 according to the first embodiment. Therefore, steps SH1 to SH5 and SH16 will not be described in detail.

As shown in Fig. 27, the assist controller 104H includes an assist force arithmetic unit 140, a first state determiner 150, a torque determiner 151, a vehicle speed calculator 152, a vehicle speed determiner 153, a motor rotation determiner 154, a driving force setter 164, a driving force change rate setter 165, a travel distance measuring unit 166, a travel distance determiner 167, a travel distance setter 168, an operation signal determiner 160, the acceleration detector 161, an acceleration threshold setter 162, and the acceleration comparator 163.

The driving force change rate setter 165 sets a driving force change rate as a change rate in driving force by electric motor 61 to a prescribed value. The driving force change rate set by the driving force change rate setter 165 is a prescribed negative value or zero. The driving force change rate is thus set to a prescribed negative value or zero, so that the assist force of the battery-assisted bicycle 1 can be prevented from increasing in the assist control.

The acceleration detector 161 detects a real acceleration as a change rate in the real vehicle speed of the battery-assisted bicycle 1. More specifically, the real acceleration of the battery-assisted bicycle 1 is detected from changes in the real vehicle speed of the battery-assisted bicycle 1 calculated by the vehicle speed calculator 152.

The acceleration threshold setter 162 sets a fifth threshold as a threshold for real positive accelerations and a sixth threshold as a threshold for real negative accelerations. The fifth threshold is a real acceleration value of the battery-assisted bicycle 1 for example when the battery-assisted bicycle 1 approaches a downward slope during the assist control. The sixth threshold is a real acceleration value of the battery-assisted bicycle 1 for example when the brake is applied while the assist control is performed.

The acceleration comparator 163 compares a real acceleration detected by the acceleration detector 161 to the fifth threshold as the threshold for real positive accelerations and the sixth threshold for real negative accelerations until the travel distance from the point corresponding to the input of the operation signal reaches the second distance.

### Assist Control Flow

Now, the assist control carried out in the battery-assisted bicycle 1 having the above-described structure to assist the movement of the battery-assisted bicycle 1 will be described by referring to the flow in Fig. 28.

As the assist control flow as shown in Fig. 28 starts (START), steps SH1 to SH5 are carried out. In step SH6, the travel distance measuring unit 166 starts to measure the travel distance from the point corresponding to the input of the stop signal.

In step SH7, the driving force setter 164 sets driving force by the electric motor 61 at the point corresponding to the input of the stop signal is set as fourth driving force. In step SH8, the driving force setter 164 sets third driving force as target driving force to be achieved when the travel distance from the point corresponding to the input of the stop signal from the operation unit 190 reaches the prescribed second distance. The third driving force is less than the fourth driving force.

In step SH9, the driving force change rate setter 165 sets third and fourth change rates as change rates in driving force by the electric motor 61. The third change rate is a change rate in the driving force when the driving force of the electric motor 61 changes from the fourth driving force to the third driving force. The third change rate is a negative value. The fourth change rate is less than the third change rate. The fourth change rate is also a negative value.

In step SH10, the assist force arithmetic unit 140 produces driving force by the electric motor 61 so that the driving force by the electric motor 61 changes from the fourth driving force to the third driving force when the travel distance from the point corresponding to the input of the stop signal reaches the prescribed second distance. The motor controller 105 controls driving of the electric motor 61 so that the electric motor 61 outputs the driving force produced by the assist force arithmetic unit 140.

In step SH11, the acceleration comparator 163 compares a real acceleration detected by the acceleration detector 161 to the fifth threshold as the threshold for real positive accelerations and the sixth threshold as the threshold for real negative accelerations until the travel distance from the point where the operation signal is input reaches the second distance.

In step SH11, if the real acceleration detected by the acceleration detector 161 is equal to or less than the fifth threshold and equal to or more than the sixth threshold (YES), the control proceeds to step SH12. In step SH12, the assist force arithmetic unit 140 continues to produce driving force by the electric motor 61 at the third change rate. The motor controller 105 controls driving of the electric motor 61 so that the electric motor 61 outputs the driving force produced by the assist force arithmetic unit 140.

In step SH13, the travel distance determiner 167 determines whether the distance from the point corresponding to the input of the stop signal has reached the prescribed second distance.

If the travel distance determiner 167 determines in step SH13 that the distance from the point corresponding to the input of the stop signal reaches the prescribed second distance (YES), the motor controller 105 stops the electric motor 61 in step SH15 according to the driving force produced by the assist force arithmetic unit 140. On the other hand, if the travel distance determiner 167 determines that the distance from the point corresponding to the input of the stop signal has not reached the first distance (NO), the control returns to step SH11.

On the other hand, if the control proceeds from step SH10 to SH11 and the real acceleration detected by the acceleration detector 161 is more than the fifth threshold or less than the sixth threshold (NO), the control proceeds to step SH14. In step SH14, the assist force arithmetic unit 140 produces driving force by the electric motor 61 until the driving force by the electric motor 61 changes at the fourth change rate and reaches zero. The motor controller 105 controls driving of the electric motor 61 so that the electric motor 61 outputs the driving force produced by the assist force arithmetic unit 140.

In the step SH15, the electric motor 61 is stopped and this ends the assist control (END). More specifically, if the real acceleration detected by the acceleration detector 161 is more than the fifth threshold or less than the sixth threshold in step SH11 (NO), the electric motor 61 is stopped before the travel distance from the point corresponding to the input of the stop signal reaches the second distance.

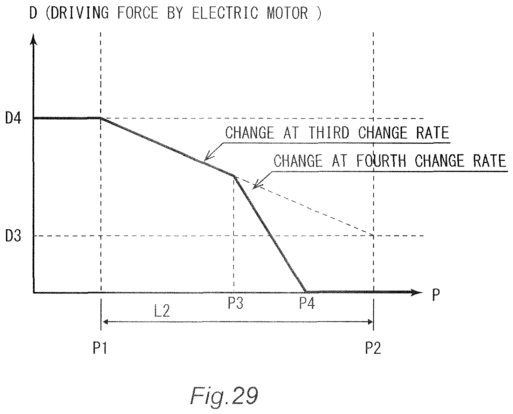

Fig. 29 is a graph showing changes in the driving force in the assist control in the battery-assisted bicycle 1 according to the eighth embodiment. The abscissa represents position P and the ordinate represents driving force D by the electric motor 61. Assume that the first state determiner 150 determines that the battery-assisted bicycle 1 is in the first state and a stop signal is input from the operation unit 190 in position P1. The driving force by the electric motor 61 in position P1 corresponding to the input of the stop signal is set as fourth driving force D4. In the assist control according to the embodiment, driving force by the electric motor 61 is controlled so that the driving force by the electric motor 61 changes from the fourth driving force D4 to third driving force D3 when the travel distance from position P1 corresponding to the input of the stop signal reaches a prescribed second distance L2. The change rate in the driving force is set to a third change rate that is a constant negative value. If it is determined that the acceleration of the battery-assisted bicycle 1 is more than the fifth threshold or less than the sixth threshold in position P3, the change rate in the driving force by the electric motor 61 is changed to the fourth change rate that is less than the third change rate. According to the embodiment, the driving force D by the electric motor 61 continues to change at the fourth change rate until the driving force D reaches zero. The driving force D by the embodiment 61 reaches zero and the electric motor 61 is stopped in position P4. More specifically, the assist control ends in position P4 before the travel distance from position P1 corresponding to the input of the stop signal reaches the second distance L2.

### Advantages of Eighth Embodiment

In the battery-assisted bicycle 1 according to the embodiment, driving of the electric motor 61 is controlled so that the assist force is reduced if the real acceleration of the battery-assisted bicycle 1 is more than the fifth threshold as the threshold for real positive accelerations or less than the sixth threshold as the threshold for real negative accelerations. The real acceleration of the battery-assisted bicycle 1 is more than the fifth threshold for example when the vehicle approaches a downward slope. The real acceleration of the battery-assisted bicycle 1 is less than the sixth threshold for example when the brake is applied and the battery-assisted bicycle 1 slows down. The assist force is reduced for example when the real acceleration increases as the vehicle approaches a downward slope or the brake is applied and the real acceleration is reduced. In this way, the user can stably support the battery-assisted bicycle 1.

According to the embodiment, if the real acceleration detected by the acceleration detector 161 is more than the fifth threshold as the threshold for real positive accelerations or less than the sixth threshold as the threshold for real negative accelerations, the electric motor 61 is stopped before the travel distance from the point corresponding to the input of the operation signal reaches the second distance L2. If the real acceleration detected by the acceleration detector 161 is more than the fifth threshold or less than the sixth threshold, the assist force is reduced in a short time, so that increase in the acceleration of the battery-assisted bicycle can be suppressed. In this way, the user can stably support the battery-assisted bicycle 1.

### Other Embodiments

In Figs. 8 and 20 according to the first and fifth embodiments, respectively, the estimated acceleration as a change rate in the estimated vehicle speed is a constant negative value but it may be otherwise. The estimated speed may be changed stepwise. Alternatively, the estimated acceleration may be inconstant and may change among zero and negative values.

In Figs. 14 and 26 according to the third and seventh embodiments, respectively, the change rate in the driving force by the electric motor 61 is a constant negative value but it may be otherwise. The driving force may be changed stepwise. The change rate in the driving force by the electric motor 61 may be inconstant and change among zero and negative values.

According to the embodiments, the first state determiner 150 determines that the first state is attained if the pedal effort is equal to or less than a prescribed value and the real vehicle speed is equal to or less than a prescribed value, and the rotation of the electric motor 61 is equal to or more than a prescribed value based on detection results from the torque determiner 151, the vehicle speed determiner 153, and the motor rotation determiner 154, but it may be determined otherwise. The first state determiner may determine that the first state is attained if for example no riding user is detected and a real vehicle speed is generated. In this way, when the user moves the battery-assisted bicycle 1 without riding the battery-assisted bicycle 1, the assist control can be carried out.

Whether there is a user riding the vehicle may be detected for example using a seat pressure detector and a seat pressure determiner. The seat pressure detector detects pressure applied on a seating surface of the seat. The seat pressure determiner determines whether the pressure detected by the seat pressure detector is equal to or less than a prescribed value. The first state determiner determines that the first state is attained if the seat pressure determiner determines that the pressure applied on the seating surface of the seat is equal to or less than a prescribed value. In this way, the assist control can be carried out while no use is seated on the vehicle.

Alternatively, whether the first state is attained may be determined using the crank rotation detector 58, the front wheel rotation detector 95, and the motor rotation detector 68. The first state determiner 150 determines that the first state is attained if the rotation number of the crankshaft 41 is equal to or less than a prescribed value, the real vehicle speed is equal or less than a prescribed value, and the rotation of the electric motor 61 is equal to or more than a prescribed value based on detection results from the crank rotation detector 58, the front wheel rotation detector 95, and the motor rotation detector 68. In this way, the assist control can be carried out when the battery-assisted bicycle 1 is moved while the rotation number of the crankshaft 41 is reduced.

## Claims

1. A battery-assisted bicycle configured to assist by electric motor (61) driving force, comprising:
the electric motor (61);
a vehicle speed calculator (152) configured to calculate a vehicle speed of the battery-assisted bicycle;
a first state determiner (150) configured to determine that the battery-assisted bicycle is in a first state, the battery-assisted bicycle moving by driving force by the electric motor (61) with no pedal effort in the first state;
an operation unit (190) configured to output an operation signal used to give instruction to stop the electric motor (61);
a timing unit (157) configured to measure time from a point when the operation signal is input; and
a motor controller (105) configured to control driving of the electric motor (61) so that the vehicle speed attained when elapsed time from the point of input of the operation signal reaches a prescribed first period is a first vehicle speed and stops the electric motor (61) after the first period, if the first state determiner (150) determines that the battery-assisted bicycle is in the first state and the operation signal is input from the operation unit (190).

2. A battery-assisted bicycle according to claim 1, further comprising a vehicle speed setter (155) configured to set a vehicle speed at the time point of input of the operation signal as a second vehicle speed and configured to set a vehicle speed that is equal to or lower than the second vehicle speed as the first vehicle speed, wherein the motor controller (105) is configured to control driving of the electric motor (61) so that the vehicle speed of the battery-assisted bicycle changes from the second vehicle speed to the first vehicle speed.

3. A battery-assisted bicycle according to claim 2, further comprising:
an acceleration detector (161) configured to detect an acceleration of the battery-assisted bicycle;
an acceleration comparator (163) configured to compare an acceleration detected by the acceleration detector (161) to a first threshold as a threshold for positive accelerations until the elapsed time from the point of input of the operation signal reaches the first period; and
an acceleration setter (156) configured to set first and second accelerations, the second acceleration being less than the first acceleration, provided that the vehicle speed of the battery-assisted bicycle changes from the second vehicle speed to the first vehicle speed with the first acceleration, wherein
the motor controller (105) is configured to control driving of the electric motor (61) so that the vehicle speed of the battery-assisted bicycle changes with the first acceleration if the acceleration detected by the acceleration detector (161) is equal to or less than the first threshold and so that the vehicle speed of the battery-assisted bicycle changes with the second acceleration if the acceleration detected by the acceleration detector (161) is more than the first threshold, until the elapsed time from the point of input of the operation signal reaches the first period.

4. A battery-assisted bicycle according to claim 3, wherein the motor controller (105) configured to stop the electric motor (61) before the elapsed time from the point of input of the operation signal reaches the first period if the acceleration detected by the acceleration detector (161) is more than the first threshold.

5. A battery-assisted bicycle configured to assist by electric motor (61) driving force, comprising:
the electric motor (61);
a vehicle speed calculator (152) configured to calculate a vehicle speed of the battery-assisted bicycle;
a first state determiner (150) configured to determine whether the battery-assisted bicycle is in a first state, the battery-assisted bicycle moving by driving force by the electric motor (61) with no pedal effort in the first state;
an operation unit (190) configured to output an operation signal used to give instruction to stop the electric motor (61);
a timing unit (157) configured to measure time from a point when the operation signal is input; and
a motor controller (105) configured to control driving of the electric motor (61) so that the driving force by the electric motor (61) attained when elapsed time from the point of input of the operation signal reaches a prescribed second period is first driving force and stops the electric motor (61) after the second period, if the first state determiner (150) determines that the battery-assisted bicycle is in the first state and
the operation signal is input from the operation unit (190).

6. A battery-assisted bicycle according to claim 5, further comprising:
a driving force setter (164) configured to set driving force by the electric motor (61) at the point corresponding to the input of the operation signal as second driving force and configured to set driving force that is equal to or less than the second driving force as the first driving force, wherein
the motor controller (105) is configured to control driving of the electric motor (61) so that the driving force by the electric motor (61) changes from the second driving force to the first driving force.

7. A battery-assisted bicycle according to claim 6, further comprising:
an acceleration detector (161) configured to detect an acceleration of the battery-assisted bicycle;
an acceleration comparator (163) configured to compare the acceleration detected by the acceleration detector (161) to a second threshold as a threshold for positive accelerations and a third threshold as a threshold for negative accelerations until the elapsed time from the point of input of the operation signal reaches the second period; and
a driving force change rate setter (165) configured to set first and second change rates, the second change rate being less than the first change rate, provided that the driving force by the electric motor (61) changes from the second driving force to the first driving force at the first change rate, wherein
the motor controller (105) is configured to control driving of the electric motor (61) so that the driving force by the electric motor (61) changes at the first change rate if the acceleration detected by the acceleration detector (161) is equal to or less than the second threshold and equal to or more than the third threshold and so that the driving force by the electric motor (61) changes at the second change rate if the acceleration detected by the acceleration detector (161) is more than the second threshold or less than the third threshold, until the elapsed time from the point of input of the operation signal reaches the second period.

8. A battery-assisted bicycle according to claim 7, wherein the motor controller (105) is configured to stop the electric motor (61) before the elapsed time from the point of input of the operation signal reaches the second period if the acceleration detected by the acceleration detector (161) is more than the second threshold or less than the third threshold.

9. A battery-assisted bicycle configured to assist by electric motor (61) driving force, comprising:
the electric motor (61);
a vehicle speed calculator (152) configured to calculate a vehicle speed of the battery-assisted bicycle;
a first state determiner (150) configured to determine whether the battery-assisted bicycle is in a first state, the battery-assisted bicycle moving by driving force by the electric motor (61) with no pedal effort in the first state;
an operation unit (190) configured to output an operation signal used to give instruction to stop the electric motor (61);
a travel distance measuring unit (166) configured to measure a travel distance from a point where the operation signal is input; and
a motor controller (105) configured to control driving of the electric motor (61) so that the vehicle speed attained when the travel distance from the point of input of the operation signal reaches a prescribed first distance is a third vehicle speed and stops the electric motor (61) after the travel distance from the point of input of the operation signal exceeds the first distance, if the first state determiner (150) determines that the battery-assisted bicycle is in the first state and the operation signal is input from the operation unit (190).

10. A battery-assisted bicycle according to claim 9, further comprising:
a vehicle speed setter (155) configured to set a vehicle speed at the point corresponding to the input of the operation signal as a fourth vehicle speed and sets a vehicle speed that is equal to or lower than the fourth vehicle speed as the third vehicle speed, wherein
the motor controller (105) is configured to control driving of the electric motor (61) so that the vehicle speed of the battery-assisted bicycle changes from the fourth vehicle speed to the third vehicle speed.

11. A battery-assisted bicycle according to claim 10, further comprising:
an acceleration detector (161) configured to detect an acceleration of the battery-assisted bicycle;
an acceleration comparator (163) configured to compare the acceleration detected by the acceleration detector (161) to a fourth threshold as a threshold for positive accelerations, until the travel distance of the battery-assisted bicycle from the point of input of the operation signal reaches the first distance; and
an acceleration setter (156) configured to set third and fourth accelerations, the fourth acceleration being less than the third acceleration, provided that the vehicle speed of the battery-assisted bicycle changes from the fourth vehicle speed to the third vehicle speed with the third acceleration, wherein
until the travel distance of the battery-assisted bicycle from the point of input of the operation signal reaches the first distance, the motor controller (105) is configured to control driving of the electric motor (61) so that the vehicle speed of the battery-assisted bicycle changes with the third acceleration if the acceleration detected by the acceleration detector (161) is equal to or less than the fourth threshold and so that the vehicle speed of the battery-assisted bicycle changes with the fourth acceleration if the acceleration detected by the acceleration detector (161) is more than the fourth threshold.

12. A battery-assisted bicycle according to claim 10, wherein if the acceleration detected by the acceleration detector (161) is more than the fourth threshold, the motor controller (105) is configured to stop the electric motor (61) before the travel distance of the battery-assisted bicycle from the point of input of the operation signal reaches the first distance.

13. A battery-assisted bicycle configured to assist by electric motor (61) driving force, comprising:
the electric motor (61);
a vehicle speed calculator (152) configured to calculate a vehicle speed of the battery-assisted bicycle;
a first state determiner (150) configured to determine whether the battery-assisted bicycle is in a first state, the battery-assisted bicycle moving by driving force by the electric motor (61) with no pedal effort in the first state;
an operation unit (190) configured to output an operation signal used to give instruction to stop the electric motor (61);
a travel distance measuring unit (166) configured to measure a travel distance from a point where the operation signal is input; and
a motor controller (105) configured to control driving of the electric motor (61) so that the driving force attained when the travel distance from the point of input of the operation signal reaches a second distance is third driving force and stops the electric motor (61) after the travel distance from the point of input of the operation signal exceeds the second distance, if the first state determiner (150) determines that the battery-assisted bicycle is in the first state and the operation signal is input from the operation unit (190).

14. A battery-assisted bicycle according to claim 13, further comprising a driving force setter (164) configured to set driving force by the electric motor (61) at the point corresponding to the input of the operation signal as fourth driving force and sets driving force that is equal to or less than the fourth driving force as the third driving force, wherein the motor controller (105) is configured to control driving of the electric motor (61) so that the driving force by the electric motor (61) changes from the fourth driving force to the third driving force.

15. A battery-assisted bicycle according to claim 14, further comprising:
an acceleration detector (161) configured to detect an acceleration of the battery-assisted bicycle;
an acceleration comparator (163) configured to compare an acceleration detected by the acceleration detector (161) to a fifth threshold as a threshold for positive accelerations and a sixth threshold as a threshold for negative accelerations until the travel distance of the battery-assisted bicycle from the point of input of the operation signal reaches the second distance; and
a driving force change rate setter (165) configured to set third and fourth change rates, the fourth change rate being less than the third change rate, provided that the driving force by the electric motor (61) changes from the fourth driving force to the third driving force at the third change rate, wherein
until the travel distance of the battery-assisted bicycle from the point of input of the operation signal reaches the second distance, the motor controller (105) is configured to control driving of the electric motor (61) so that the driving force by the electric motor (61) changes at the third change rate if the acceleration detected by the acceleration detector (161) is equal to or less than the fifth threshold and equal to or
more than the sixth threshold and so that the driving force by the electric motor (61) changes at the fourth change rate if the acceleration detected by the acceleration detector (161) is more than the fifth threshold or less than the sixth threshold.

16. A battery-assisted bicycle according to claim 15, wherein the motor controller (105) is configured to stop the electric motor (61) before the travel distance from the point of input of the operation signal reaches the second distance if the acceleration detected by the acceleration detector (161) is more than the fifth threshold or less than the sixth threshold.

17. A battery-assisted bicycle according to any one of claims 1 to 8, further comprising a time setter (159) configured to set a length of time between the point of input of the operation signal and the point when the electric motor (61) is stopped.

18. A battery-assisted bicycle according to any one of claims 9 to 16, further comprising a distance setter (168) configured to set a travel distance between the point of input of the operation signal and the point where the electric motor (61) is stopped.

19. A battery-assisted bicycle according to any one of claims 1 to 18, wherein the first state determiner (150) is configured to determine that the first state is attained if no riding user is detected and a vehicle speed is generated.

20. A battery-assisted bicycle according to any one of claims 1 to 18, further comprising a torque detector (57) configured to detect torque generated by a pedal effort; and
a motor rotation detector (68) configured to detect rotation of the electric motor (61), wherein
the first state determiner (150) is configured to determine that the first state is attained if a pedal effort is equal to or less than a prescribed value, the rotation of the electric motor (61) is equal to or more than a prescribed value, and the vehicle speed is equal to or less than a prescribed value based on detection results from the torque detector (57) and the motor rotation detector (68) and the vehicle speed calculated by the vehicle speed calculator (152).

21. A battery-assisted bicycle according to any one of claims 1 to 18, further comprising:
a seat pressure detector configured to detect pressure applied on a seating surface of a seat (24); and
a seat pressure determiner configured to determine whether the pressure detected by the seat pressure detector is equal to or less than a prescribed value, wherein the first state determiner (150) is configured to determine that the first state is attained if the pressure applied on the seating surface of the seat determined by the seat pressure determiner is equal to or less than a prescribed value.

## Patentansprüche

1. Ein batterie-unterstütztes Fahrrad konfiguriert, um durch eine Elektro-Motor-(61)-Antriebskraft zu unterstützen, das umfasst:
den Elektro-Motor (61);
einen Fahrzeug-Geschwindigkeits-Berechner (152), der konfiguriert ist, um eine Fahrzeug-Geschwindigkeit des batterie-unterstützten Fahrrads zu berechnen;
einen Erster-Zustand-Bestimmer (150), der konfiguriert ist zu bestimmen, dass das batterie-unterstützte Fahrrad in einem ersten Zustand ist, das batterie-unterstützte Fahrrad bewegt sich durch Antriebskraft durch den Elektro-Motor (61) ohne Pedal-Leistung in dem ersten Zustand;
eine Betriebs-Einheit (190), die konfiguriert ist, um ein Betriebs-Signal auszugeben, das verwendet ist, um Instruktionen zum Anhalten des Elektro-Motors (61) zu geben; eine Zeit-Einheit (157), die konfiguriert ist, um eine Zeit von einem Punkt, wenn das Betriebs-Signal eingegeben ist, zu messen;
eine Motor-Steuerung (105), die konfiguriert ist, um Antrieb des Elektro-Motors (61) zu steuern, so dass die Fahrzeug-Geschwindigkeit, die erreicht ist, wenn eine verstrichene Zeit von dem Punkt der Eingabe des Betriebs-Signals eine vorgegebene erste Periode erreicht, eine erste Fahrzeug-Geschwindigkeit ist, und den Elektro-Motor (61) nach der ersten Periode stoppt, wenn der Erster-Zustand-Bestimmer (150) bestimmt, dass das batterie-unterstützte Fahrrad in dem ersten Zustand ist und das Betriebs-Signal von der Betriebs-Einheit (190) eingegeben ist.

2. Ein batterie-unterstütztes Fahrrad gemäß Anspruch 1, das weiterhin umfasst:
einen Fahrzeug-Geschwindigkeits-Setzer (155), der konfiguriert ist, um eine Fahrzeug-Geschwindigkeit an den Zeitpunkt der Eingabe des Betriebs-Signals als eine zweite Fahrzeug-Geschwindigkeit zu setzen, und konfiguriert ist, um eine Fahrzeug-Geschwindigkeit, die gleich oder niedriger ist als die zweite Fahrzeug-Geschwindigkeit, als die erste Fahrzeug-Geschwindigkeit zu setzen, wobei die Motor-Steuerung (105) konfiguriert ist, den Antrieb des Elektro-Motors (61) zu steuern, so dass sich die Fahrzeug-Geschwindigkeit des batterie-unterstützten Fahrrads von der zweiten Fahrzeug-Geschwindigkeit zu der ersten Fahrzeug-Geschwindigkeit ändert.

3. Ein batterie-unterstütztes Fahrrad gemäß Anspruch 2, das weiterhin umfasst:
einen Beschleunigungs-Detektor (161), der konfiguriert ist, um eine Beschleunigung des batterie-unterstützten Fahrrads zu erfassen;
einen Beschleunigungs-Vergleicher (163), der konfiguriert ist, um eine Beschleunigung, erfasst durch den Beschleunigungs-Detektor (161), mit einem ersten Grenzwert, als einen Grenzwert für positive Beschleunigungen bis die verstrichene Zeit von dem Punkt der Eingabe des Betriebs-Signals die erste Periode erreicht, zu vergleichen; und
einen Beschleunigungs-Setzer (156), der konfiguriert ist, um erste und zweite Beschleunigungen zu setzen, die zweite Beschleunigung ist niedriger als die erste Beschleunigung, vorgesehen, so dass sich die Fahrzeug-Geschwindigkeit des batterie-unterstützten Fahrrads von der zweiten Fahrzeug-Geschwindigkeit zu der ersten Fahrzeug-Geschwindigkeit mit der ersten Beschleunigung ändert, wobei die Motor-Steuerung (105) konfiguriert ist, den Antrieb des Elektro-Motors (61) zu steuern, so dass sich die Fahrzeug-Geschwindigkeit des batterie-unterstützten Fahrrads mit der ersten Beschleunigung ändert, wenn die Beschleunigung, erfasst durch den Beschleunigungs-Detektor (161), gleich oder geringer als der erste Grenzwert ist, und so dass ssich die Fahrzeug-Geschwindigkeit des batterie-unterstützten Fahrrads mit der zweiten Beschleunigung ändert, wenn die Beschleunigung, erfasst durch den Beschleunigungs-Detektor (161), größer als der erste Grenzwert ist, bis die verstrichene Zeit von den Punkt der Eingabe des Betriebs-Signals die erste Periode erreicht.

4. Ein batterie-unterstütztes Fahrrad gemäß Anspruch 3, wobei die Motor-Steuerung (105) konfiguriert ist, um den Elektro-Motor (61) anzuhalten, bevor die verstrichene Zeit von dem Punkt der Eingabe des Betriebs-Signals die erste Zeitperiode erreicht, wenn die Beschleunigung, erfasst durch den Beschleunigungs-Detektor (161), größer als der erste Grenzwert ist.

5. Ein batterie-unterstütztes Fahrrad konfiguriert, um durch eine Elektro-Motor-(61)-Antriebskraft zu unterstützen, das umfasst:
den Elektro-Motor (61);
einen Fahrzeug-Geschwindigkeits-Berechner (152), der konfiguriert ist, um eine Fahrzeug-Geschwindigkeit des batterie-unterstützten Fahrrads zu berechnen;
einen Erster-Zustand-Bestimmer (150), der konfiguriert ist zu bestimmen, dass das batterie-unterstützte Fahrrad in einem ersten Zustand ist, das batterie-unterstützte Fahrrad bewegt sich durch Antriebskraft durch den Elektro-Motor (61) ohne Pedal-Leistung in dem ersten Zustand;
eine Betriebs-Einheit (190), die konfiguriert ist, um ein Betriebs-Signal auszugeben, das verwendet ist, um Instruktionen zum Anhalten des Elektro-Motors (61) zu geben; eine Zeit-Einheit (157), die konfiguriert ist, um eine Zeit von einem Punkt, wenn das Betriebs-Signal eingegeben ist, zu messen;
eine Motor-Steuerung (105), die konfiguriert ist, um Antrieb des Elektro-Motors (61) zu steuern, so dass die Antriebskraft durch den Elektro-Motor (61), die erreicht ist, wenn eine verstrichene Zeit von dem Punkt der Eingabe des Betriebs-Signals eine vorgegebene zweite Periode erreicht, eine erste Antriebskraft ist, und den Elektro-Motor (61) nach der zweiten Periode stoppt, wenn der Erster-Zustand-Bestimmer (150) bestimmt, dass das batterie-unterstützte Fahrrad in dem ersten Zustand ist und das Betriebs-Signal von der Betriebs-Einheit (190) eingegeben ist.

6. Ein batterie-unterstütztes Fahrrad gemäß Anspruch 5, das weiterhin umfasst:
einen Antriebskraft-Setzer (164), der konfiguriert ist, um eine Antriebskraft durch den Elektro-Motor (61) an den Zeitpunkt der Eingabe des Betriebs-Signals als eine zweite Antriebskraft zu setzen, und konfiguriert ist, um eine Antriebskraft, die gleich oder niedriger ist als die zweite Antriebskraft, als die erste Antriebskraft zu setzen, wobei die Motor-Steuerung (105) konfiguriert ist, den Antrieb des Elektro-Motors (61) zu steuern, so dass sich die Antriebskraft durch den Elektro-Motor (61) von der zweiten Antriebskraft zu der ersten Antriebskraft ändert.

7. Ein batterie-unterstütztes Fahrrad gemäß Anspruch 6, das weiterhin umfasst:
einen Beschleunigungs-Detektor (161), der konfiguriert ist, um eine Beschleunigung des batterie-unterstützten Fahrrads zu erfassen;
einen Beschleunigungs-Vergleicher (163), der konfiguriert ist, um eine Beschleunigung, erfasst durch den Beschleunigungs-Detektor (161), mit einem zweiten Grenzwert, als einen Grenzwert für positive Beschleunigungen, und einem dritten Grenzwert als einen Grenzwert für negative Beschleunigungen bis die verstrichene Zeit von dem Punkt der Eingabe des Betriebs-Signals die zweite Periode erreicht, zu vergleichen; und
einen Antriebskraft-Änderungs-Raten-Setzer (165), der konfiguriert ist, erste und zweite Änderungs-Raten zu setzen, die zweite Änderungs-Rate ist kleiner als die erste Änderungs-Rate, vorgesehen, so dass sich die Antriebskraft des Elektro-Motors (61) von der zweiten Antriebskraft zu der ersten Antriebskraft mit der ersten Änderungs-Rate ändert, wobei
die Motor-Steuerung (105) konfiguriert ist, den Antrieb des Elektro-Motors (61) zu steuern, so dass sich die Antriebskraft des Elektro-Motors (61) mit der ersten Änderungs-Rate ändert, wenn die Beschleunigung, erfasst durch den Beschleunigungs-Detektor (161), gleich oder geringer als der zweite Grenzwert und
gleich oder größer als der dritte Grenzwert ist, und so dass sich die Antriebskraft durch den Elektro-Motor (61) mit der zweiten Änderungs-Rate ändert, wenn die Beschleunigung, erfasst durch den Beschleunigungs-Detektor (161), größer als der zweite Grenzwert oder kleiner als der dritte Grenzwert ist, bis die verstrichene Zeit von dem Punkt der Eingabe des Betriebs-Signals die zweite Periode erreicht.

8. Ein batterie-unterstütztes Fahrrad gemäß Anspruch 7, wobei die Motor-Steuerung (105) konfiguriert ist, den Elektro-Motor (61) anzuhalten, bevor die verstrichene Zeit von dem Punkt der Eingabe des Betriebs-Signals die zweite Periode erreicht, wenn die Beschleunigung, erfasst durch den Beschleunigungs-Detektor (161), größer als der zweite Grenzwert oder geringer als der dritte Grenzwert ist.

9. Ein batterie-unterstütztes Fahrrad konfiguriert, um durch eine Elektro-Motor-(61)-Antriebskraft zu unterstützen, das umfasst:
den Elektro-Motor (61);
einen Fahrzeug-Geschwindigkeits-Berechner (152), der konfiguriert ist, um eine Fahrzeug-Geschwindigkeit des batterie-unterstützten Fahrrads zu berechnen;
einen Erster-Zustand-Bestimmer (150), der konfiguriert ist zu bestimmen, dass das batterie-unterstützte Fahrrad in einem ersten Zustand ist, das batterie-unterstützte Fahrrad bewegt sich durch Antriebskraft durch den Elektro-Motor (61) ohne Pedal-Leistung in dem ersten Zustand;
eine Betriebs-Einheit (190), die konfiguriert ist, um ein Betriebs-Signal auszugeben, das verwendet ist, um Instruktionen zum Anhalten des Elektro-Motors (61) zu geben;
eine Fahrdistanz-Mess-Einheit (166), die konfiguriert ist, um eine Fahrdistanz von einem Punkt, von dem das Betriebs-Signal eingegeben ist, zu messen; und
eine Motor-Steuerung (105), die konfiguriert ist, um Antrieb des Elektro-Motors (61) zu steuern, so dass die Fahrzeug-Geschwindigkeit, die erreicht ist, wenn die Fahrdistanz von dem Punkt der Eingabe des Betriebs-Signals eine vorgegebene erste Distanz erreicht, eine dritte Fahrzeug-Geschwindigkeit ist, und den Elektro-Motor (61) stoppt, nach dem die Fahrdistanz von dem Punkt der Eingabe des Betriebs-Signals die erste Distanz überschreitet, wenn der Erster-Zustand-Bestimmer (150) bestimmt, dass das batterie-unterstützte Fahrrad in dem ersten Zustand ist und das Betriebs-Signal von der Betriebs-Einheit (190) eingegeben ist.

10. Ein batterie-unterstütztes Fahrrad gemäß Anspruch 9, das weiterhin umfasst:
einen Fahrzeug-Geschwindigkeits-Setzer (155) der konfiguriert ist, um eine Fahrzeug-Geschwindigkeit an einem Punkt zu setzen, entsprechend zu der Eingabe des Betriebs-Signals als eine vierte Fahrzeug-Geschwindigkeit, und um eine Fahrzeug-Geschwindigkeit, die gleich oder geringer als die vierte Fahrzeug-Geschwindigkeit ist, als die dritte Fahrzeug-Geschwindigkeit zu setzen, wobei die Motor-Steuerung (105) konfiguriert ist, um Antrieb des Elektro-Motors (61) zu steuern, so dass sich die Fahrzeug-Geschwindigkeit des batterie-unterstützten Fahrrads von der vierten Fahrzeug-Geschwindigkeit zu der dritten Fahrzeug-Geschwindigkeit ändert.

11. Ein batterie-unterstütztes Fahrrad gemäß Anspruch 10, das weiterhin umfasst:
einen Beschleunigungs-Detektor (161), der konfiguriert ist, um eine Beschleunigung des batterie-unterstützten Fahrrads zu erfassen;
einen Beschleunigungs-Vergleicher (163), der konfiguriert ist, die Beschleunigung, erfasst durch den Beschleunigungs-Detektor (161), mit einem vierten Grenzwert, als ein Grenzwert für positive Beschleunigungen, zu vergleichen, bis die Fahrdistanz des batterie-unterstützten Fahrrads von dem Punkt der Eingabe des Betriebs-Signals die erste Distanz erreicht; und
einen Beschleunigungs-Setzer (156), der konfiguriert ist, um dritte und vierte Beschleunigungen zu setzen, die vierte Beschleunigung ist niedriger als die dritte Beschleunigung, vorgesehen, so dass die Fahrzeug-Geschwindigkeit des batterie-unterstützten Fahrrads von der vierten Fahrzeug-Geschwindigkeit zu der dritten Fahrzeug-Geschwindigkeit mit der dritten Beschleunigung ändert, wobei, bis die Fahrdistanz des batterie-unterstützten Fahrrads von dem Punkt der Eingabe des Betriebs-Signals die erste Distanz erreicht, ist die Motor-Steuerung (105) konfiguriert, Antrieb des Elektro-Motors (61) zu steuern, so dass sich die Fahrzeug-Geschwindigkeit des batterie-unterstützten Fahrrads mit der dritten Beschleunigung ändert, wenn die Beschleunigung, erfasst durch den Beschleunigungs-Detektor (161), gleich oder geringer als der vierte Grenzwert ist, und so dass sich die Fahrzeug-Geschwindigkeit des batterie-unterstützten Fahrrads mit der vierten Beschleunigung ändert, wenn die Beschleunigung, erfasst durch den Beschleunigungs-Detektor (161), größer als der vierte Grenzwert ist.

12. Ein batterie-unterstütztes Fahrrad gemäß Anspruch 10, wobei wenn die Beschleunigung, erfasst durch den Beschleunigungs-Detektor (161), größer als der vierte Grenzwert ist, die Motor-Steuerung (105) konfiguriert ist, den Elektro-Motor (61) anzuhalten, bevor die Fahrdistanz des batterie-unterstützten Fahrrads von dem Punkt der Eingabe des Betriebs-Signals die erste Distanz erreicht.

13. Ein batterie-unterstütztes Fahrrad konfiguriert, um durch eine Elektro-Motor-(61)-Antriebskraft zu unterstützen, das umfasst:
den Elektro-Motor (61);
einen Fahrzeug-Geschwindigkeits-Berechner (152), der konfiguriert ist, um eine Fahrzeug-Geschwindigkeit des batterie-unterstützten Fahrrads zu berechnen;
einen Erster-Zustand-Bestimmer (150), der konfiguriert ist zu bestimmen, dass das batterie-unterstützte Fahrrad in einem ersten Zustand ist, das batterie-unterstützte Fahrrad bewegt sich durch Antriebskraft durch den Elektro-Motor (61) ohne Pedal-Leistung in dem ersten Zustand;
eine Betriebs-Einheit (190), die konfiguriert ist, um ein Betriebs-Signal auszugeben, das verwendet ist, um Instruktionen zum Anhalten des Elektro-Motors (61) zu geben; eine Fahrdistanz-Mess-Einheit (166), die konfiguriert ist, um eine Fahrdistanz von einem Punkt, von dem das Betriebs-Signal eingegeben ist, zu messen; und
eine Motor-Steuerung (105), die konfiguriert ist, um Antrieb des Elektro-Motors (61) zu steuern, so dass die Antriebskraft durch den Elektro-Motor (61), die erreicht ist, wenn die Fahrdistanz von dem Punkt der Eingabe des Betriebs-Signals eine zweite Distanz erreicht, eine dritte Antriebskraft ist, und den Elektro-Motor (61) stoppt, nachdem die Fahrdistanz von dem Punkt der Eingabe des Betriebs-Signals die zweite Distanz überschreitet, wenn der Erster-Zustand-Bestimmer (150) bestimmt, dass das batterie-unterstützte Fahrrad in dem ersten Zustand ist und das Betriebs-Signal von der Betriebs-Einheit (190) eingegeben ist.

14. Ein batterie-unterstütztes Fahrrad gemäß Anspruch 13, das weiterhin umfasst:
einen Antriebskraft-Setzer (164), der konfiguriert ist, um eine Antriebskraft durch den Elektro-Motor (61) an den Zeitpunkt entsprechend der Eingabe des Betriebs-Signals als eine vierte Antriebskraft zu setzen und setzt Antriebskraft die gleich oder weniger ist als die vierte Antriebskraft als die dritte Antriebskraft, wobei die Motor-Steuerung (105) konfiguriert ist, den Antrieb des Elektro-Motors (61) zu steuern, so dass sich die Antriebskraft durch den Elektro-Motor (61) von der vierten Antriebskraft zu der dritten Antriebskraft ändert.

15. Ein batterie-unterstütztes Fahrrad gemäß Anspruch 14, das weiterhin umfasst:
einen Beschleunigungs-Detektor (161), der konfiguriert ist, um eine Beschleunigung des batterie-unterstützten Fahrrads zu erfassen;
einen Beschleunigungs-Vergleicher (163), der konfiguriert ist, um eine Beschleunigung, erfasst durch den Beschleunigungs-Detektor (161), mit einem fünften Grenzwert, als einen Grenzwert für positive Beschleunigungen, und einem sechsten Grenzwert als einen Grenzwert für negative Beschleunigungen bis die bis die Fahrdistanz des batterie-unterstützten Fahrrads von dem Punkt der Eingabe des Betriebs-Signals die zweite Distanz erreicht, zu vergleichen; und
einen Antriebskraft-Änderungs-Raten-Setzer (165), der konfiguriert ist, dritte und vierte Änderungs-Raten zu setzen, die vierte Änderungs-Rate ist kleiner als die dritte Änderungs-Rate, vorgesehen, so dass sich die Antriebskraft des Elektro-Motors (61) von der vierten Antriebskraft zu der dritten Antriebskraft mit der dritten Änderungs-Rate ändert, wobei
bis die Fahrdistanz des batterie-unterstützten Fahrrads von dem Punkt der Eingabe des Betriebs-Signals die zweite Distanz erreicht, die Motor-Steuerung (105) ist konfiguriert, den Antrieb des Elektro-Motors (61) zu steuern, so dass sich die Antriebskraft des Elektro-Motors (61) mit der dritten Änderungs-Rate ändert, wenn die Beschleunigung, erfasst durch den Beschleunigungs-Detektor (161), gleich oder geringer als der fünften Grenzwert und gleich oder größer als der sechsten Grenzwert ist, und so dass sich die Antriebskraft durch den Elektro-Motor (61) mit der vierten Änderungs-Rate ändert, wenn die Beschleunigung, erfasst durch den Beschleunigungs-Detektor (161), größer als der fünfte Grenzwert oder kleiner als der sechste Grenzwert ist.

16. Ein batterie-unterstütztes Fahrrad gemäß Anspruch 15, wobei die Motor-Steuerung (105) konfiguriert ist, den Elektro-Motor (61) anzuhalten, bevor die Fahrdistanz von dem Punkt der Eingabe des Betriebs-Signals die zweite Distanz erreicht, wenn die Beschleunigung, erfasst durch den Beschleunigungs-Detektor (161), größer als der fünften Grenzwert oder geringer als der sechste Grenzwert ist.

17. Ein batterie-unterstütztes Fahrrad gemäß irgendeinem der Ansprüche 1 bis 8, das weiterhin umfasst einen Zeit-Setzer (159), der konfiguriert ist, eine Länge der Zeit zwischen dem Punkt der Eingabe des Betriebs-Signals und dem Punkt, wenn der Elektro-Motor (61) angehalten ist, zu setzen.

18. Ein batterie-unterstütztes Fahrrad gemäß irgendeinem der Ansprüche 9 bis 16, das weiterhin umfasst einen Distanz-Setzer (168), der konfiguriert ist, um eine Fahrdistanz zwischen dem Punkt der Eingabe des Betriebs-Signals und dem Punkt, an dem der Elektro-Motor (61) gestoppt ist, zu setzen.

19. Ein batterie-unterstütztes Fahrrad gemäß irgendeinem der Ansprüche 1 bis 18, wobei der Erster-Zustand-Bestimmer (150) konfiguriert ist zu bestimmen, dass der erste Zustand erreicht ist, wenn kein Fahrnutzer erfasst ist und eine Fahrzeug-Geschwindigkeit erzeugt ist.

20. Ein batterie-unterstütztes Fahrrad gemäß irgendeinem der Ansprüche 1 bis 18, das weiterhin umfasst, einen Drehmoment-Detektor (57), der konfiguriert ist, um Moment, erzeugt durch eine Pedal-Leistung zu erfassen; und
einen Motor-Dreh-Detektor (68), der konfiguriert ist, Drehung des Elektro-Motors (61) zu erfassen, wobei
der Erster-Zustand-Bestimmer (150) konfiguriert ist zu bestimmen, dass der erste Zustand erreicht ist, wenn eine Pedalkraft gleich oder geringer als ein vorgegebener Wert ist, die Drehung des Elektro-Motors (61) gleich oder mehr als ein vorgegebener Wert ist, und die Fahrzeug-Geschwindigkeit gleich oder weniger als ein vorgegebener Wert ist, auf Grundlage von Erfassungsergebnissen von dem Drehmoment-Detektor (57) und dem Motor-Dreh-Detektor (68) und der Fahrzeug-Geschwindigkeit berechnet durch den Fahrzeug-Geschwindigkeits-Berechner (152).

21. Ein batterie-unterstütztes Fahrrad gemäß irgendeinem der Ansprüche 1 bis 18, das weiterhin umfasst:
einen Sitz-Druck-Detektor, der konfiguriert ist, Druck, der auf eine Sitzfläche eines Sitzes (24) aufgebracht ist, zu erfassen;
einen Sitz-Druck-Bestimmer, der konfiguriert ist zu bestimmen ob der Druck, erfasst durch den Sitz-Druck-Detektor, gleich oder geringer als ein vorgegebener Wert ist, wobei der Erster-Zustand-Bestimmer (150) konfiguriert ist zu bestimmen, dass der erste Zustand erreicht ist, wenn der Druck, aufgebracht auf die Sitzfläche des Sitzes, bestimmt durch den Sitz-Druck-Bestimmer, gleich oder geringer als ein vorgegebener Wert ist.

## Revendications

1. Bicyclette assistée par batterie configurée pour fournir une assistance grâce à la force d'entraînement d'un moteur électrique (61), comprenant :
le moteur électrique (61),
un calculateur de vitesse de véhicule (152) configuré pour calculer la vitesse de véhicule de la bicyclette assistée par batterie,
un dispositif de détermination de premier état (150) configuré pour déterminer que la bicyclette assistée par batterie se trouve dans un premier état, la bicyclette assistée par batterie se déplaçant par force d'entraînement grâce au moteur électrique (61) sans effort sur les pédales dans le premier état,
une unité de fonctionnement (190) configurée pour délivrer en sortie un signal de fonctionnement utilisé pour donner l'ordre d'arrêt du moteur électrique (61),
une unité de séquencement (157) configurée pour mesurer le temps depuis un point où le signal de fonctionnement est reçu en entrée, et
un contrôleur de moteur (105) configuré pour commander l'entraînement du moteur électrique (61) de telle sorte que la vitesse de véhicule, obtenue lorsque le temps écoulé depuis le point de réception en entrée du signal de fonctionnement a atteint une première période prescrite, représente une première vitesse du véhicule, et pour arrêter le moteur électrique (61) après la première période, si le dispositif de détermination de premier état (150) a défini que la bicyclette assistée par batterie se trouve dans le premier état et que le signal de fonctionnement est reçu en entrée en provenance de l'unité de fonctionnement (190).

2. Bicyclette assistée par batterie selon la revendication 1, comprenant en outre un dispositif de réglage de vitesse de véhicule (155) configuré pour régler la vitesse de véhicule au point dans le temps de réception en entrée du signal de fonctionnement en tant que deuxième vitesse de véhicule, et configuré pour régler une vitesse de véhicule qui est inférieure ou égale à la deuxième vitesse de véhicule en tant que première vitesse de véhicule, le contrôleur de moteur (105) étant configuré pour commander l'entraînement du moteur électrique (61) de telle sorte que la vitesse de véhicule de la bicyclette assistée par batterie se modifie de deuxième vitesse de véhicule en première vitesse de véhicule.

3. Bicyclette assistée par batterie selon la revendication 2, comprenant en outre :
un détecteur d'accélération (161) configuré pour détecter une accélération de la bicyclette assistée par batterie,
un comparateur d'accélération (163) configuré pour comparer l'accélération détectée par le détecteur d'accélération (161) à un premier seuil défini en tant que seuil pour les accélérations positives jusqu'à ce que le temps écoulé depuis le point de réception en entrée du signal de fonctionnement atteigne la première période, et
un dispositif de réglage d'accélération (156) configuré pour régler les première et deuxième accélérations, la deuxième accélération étant inférieure à la première accélération, sous réserve que la vitesse de véhicule de la bicyclette assistée par batterie se modifie de deuxième vitesse de véhicule en première vitesse de véhicule avec la première accélération, dans laquelle
le contrôleur de moteur (105) est configuré pour commander l'entraînement du moteur électrique (61) de sorte à ce que la vitesse de véhicule de la bicyclette assistée par batterie se modifie grâce à la première accélération si l'accélération détectée par le détecteur d'accélération (161) est inférieure ou égale au premier seuil, et de sorte à ce que la vitesse de véhicule de la bicyclette assistée par batterie se modifie grâce à la deuxième accélération si l'accélération détectée par le détecteur d'accélération (161) est supérieure au premier seuil, jusqu'à ce que le temps écoulé depuis le point de réception en entrée du signal de fonctionnement atteigne la première période.

4. Bicyclette assistée par batterie selon la revendication 3, dans laquelle le contrôleur de moteur (105) est configuré pour stopper le moteur électrique (61) avant que le temps écoulé depuis le point de réception en entrée du signal d'opération atteigne la première période, si l'accélération détectée par le détecteur d'accélération (161) est supérieure au premier seuil.

5. Bicyclette assistée par batterie configurée pour fournir une assistance grâce à la force d'entraînement d'un moteur électrique (61), comprenant :
le moteur électrique (61),
un calculateur de vitesse de véhicule (152) configuré pour calculer la vitesse de véhicule de la bicyclette assistée par batterie,
un dispositif de détermination de premier état (150) configuré pour déterminer que la bicyclette assistée par batterie se trouve dans un premier état, la bicyclette assistée par batterie se déplaçant par force d'entraînement grâce au moteur électrique (61) sans effort sur les pédales dans le premier état,
une unité de fonctionnement (190) configurée pour délivrer en sortie un signal de fonctionnement utilisé pour donner l'ordre d'arrêt du moteur électrique (61),
une unité de séquencement (157) configurée pour mesurer le temps depuis un point où le signal de fonctionnement est reçu en entrée, et
un contrôleur de moteur (105) configuré pour commander l'entraînement du moteur électrique (61) de telle sorte que la force d'entraînement du moteur électrique (61), obtenue lorsque le temps écoulé depuis le point de réception en entrée du signal de fonctionnement a atteint une seconde période prescrite, représente une première force d'entraînement et arrête le moteur électrique (61) après la seconde période, si le dispositif de détermination de premier état (150) a défini que la bicyclette assistée par batterie se trouve dans le premier état et que le signal de fonctionnement est reçu en entrée en provenance de l'unité de fonctionnement (190).

6. Bicyclette assistée par batterie selon la revendication 5, comprenant en outre :
un dispositif de réglage de force d'entraînement (164) configuré pour régler la force d'entraînement du moteur électrique (61) au point correspondant à la réception en entrée du signal de fonctionnement en tant que deuxième force d'entraînement, et configuré pour régler une force d'entraînement qui est inférieure ou égale à la deuxième force d'entraînement en tant que première force d'entraînement, dans laquelle
le contrôleur de moteur (105) est configuré pour commander l'entraînement du moteur électrique (61) de telle sorte que la force d'entraînement du moteur électrique (61) se modifie de deuxième force d'entraînement en première force d'entraînement.

7. Bicyclette assistée par batterie selon la revendication 6, comprenant en outre :
un détecteur d'accélération (161) configuré pour détecter une accélération de la bicyclette assistée par batterie,
un comparateur d'accélération (163) configuré pour comparer l'accélération détectée par le détecteur d'accélération (161) à un deuxième seuil défini en tant que seuil pour les accélérations positives et à un troisième seuil défini en tant que seuil pour les accélérations négatives jusqu'à ce que le temps écoulé depuis le point de réception en entrée du signal de fonctionnement atteigne la seconde période, et
un dispositif de réglage de taux de changement de forces d'entraînement (165) configuré pour régler des premier et deuxième taux de changement, le deuxième taux de changement étant inférieur au premier taux de changement, sous réserve que la force d'entraînement du moteur électrique (61) se modifie de deuxième force d'entraînement en première force d'entraînement avec le premier taux de changement, dans laquelle
le contrôleur de moteur (105) est configuré pour commander l'entraînement du moteur électrique (61) de sorte à ce que la force d'entraînement du moteur électrique (61) se modifie au premier taux de changement si l'accélération détectée par le détecteur d'accélération (161) est inférieure ou égale au deuxième seuil et est supérieure ou égale au troisième seuil, et de sorte à ce que la force d'entraînement du moteur électrique (61) se modifie au deuxième taux de changement si l'accélération détectée par le détecteur d'accélération (161) est supérieure au deuxième seuil ou est inférieure au troisième seuil, jusqu'à ce que le temps écoulé depuis le point de réception en entrée du signal de fonctionnement atteigne la seconde période.

8. Bicyclette assistée par batterie selon la revendication 7, dans laquelle le contrôleur de moteur (105) est configuré pour stopper le moteur électrique (61) avant que le temps écoulé depuis le point de réception en entrée du signal d'opération a atteint la seconde période, si l'accélération détectée par le détecteur d'accélération (161) est supérieure au deuxième seuil ou est inférieure au troisième seuil.

9. Bicyclette assistée par batterie configurée pour fournir une assistance grâce à la force d'entraînement d'un moteur électrique (61), comprenant :
le moteur électrique (61),
un calculateur de vitesse de véhicule (152) configuré pour calculer la vitesse de véhicule de la bicyclette assistée par batterie,
un dispositif de détermination de premier état (150) configuré pour déterminer que la bicyclette assistée par batterie se trouve dans un premier état, la bicyclette assistée par batterie se déplaçant par force d'entraînement grâce au moteur électrique (61) sans effort sur les pédales dans le premier état,
une unité de fonctionnement (190) configurée pour délivrer en sortie un signal de fonctionnement utilisé pour donner l'ordre d'arrêt du moteur électrique (61),
une unité de mesure de distance de trajet (166) configurée pour mesurer une distance de trajet depuis un point où le signal de fonctionnement est reçu en entrée, et
un contrôleur de moteur (105) configuré pour commander l'entraînement du moteur électrique (61) de telle sorte que la vitesse de véhicule, obtenue lorsque la distance de trajet depuis le point de réception en entrée du signal de fonctionnement a atteint une première distance prescrite, représente une troisième vitesse du véhicule, et pour arrêter le moteur électrique (61) après que la distance de trajet depuis le point de réception en entrée du signal de fonctionnement a dépassé la première distance, si le dispositif de détermination de premier état (150) a défini que la bicyclette assistée par batterie se trouve dans le premier état et que le signal de fonctionnement est reçu en entrée en provenance de l'unité de fonctionnement (190).

10. Bicyclette assistée par batterie selon la revendication 9, comprenant en outre :
un dispositif de réglage de vitesse de véhicule (155) configuré pour régler la vitesse de véhicule au point correspondant à la réception en entrée du signal de fonctionnement en tant que quatrième vitesse de véhicule, et configuré pour régler une vitesse de véhicule qui est inférieure ou égale à la quatrième vitesse de véhicule en tant que troisième vitesse de véhicule, dans laquelle
le contrôleur de moteur (105) est configuré pour commander l'entraînement du moteur électrique (61) de telle sorte que la vitesse de véhicule de la bicyclette assistée par batterie se modifie de quatrième vitesse de véhicule en troisième vitesse de véhicule.

11. Bicyclette assistée par batterie selon la revendication 10, comprenant en outre :
un détecteur d'accélération (161) configuré pour détecter une accélération de la bicyclette assistée par batterie,
un comparateur d'accélération (163) configuré pour comparer l'accélération détectée par le détecteur d'accélération (161) à un quatrième seuil défini en tant que seuil pour les accélérations positives jusqu'à ce que la distance de trajet de la bicyclette assistée par batterie depuis le point de réception en entrée du signal de fonctionnement atteigne la première distance, et
un dispositif de réglage d'accélération (156) configuré pour régler des troisième et quatrième accélérations, la quatrième accélération étant inférieure à la troisième accélération, sous réserve que la vitesse de véhicule de la bicyclette assistée par batterie se modifie de quatrième vitesse de véhicule en troisième vitesse de véhicule avec la troisième accélération, dans laquelle
le contrôleur de moteur (105) est configuré pour commander l'entraînement du moteur électrique (61), jusqu'à ce que la distance de trajet de la bicyclette assistée par batterie depuis le point de réception en entrée du signal de fonctionnement atteigne la première distance, de sorte à ce que la vitesse de véhicule de la bicyclette assistée par batterie se modifie grâce à la troisième accélération si l'accélération détectée par le détecteur d'accélération (161) est inférieure ou égale au quatrième seuil, et de sorte à ce que la vitesse de véhicule de la bicyclette assistée par batterie se modifie grâce à la quatrième accélération si l'accélération détectée par le détecteur d'accélération (161) est supérieure au quatrième seuil.

12. Bicyclette assistée par batterie selon la revendication 10, dans laquelle, si l'accélération détectée par le détecteur d'accélération (161) est supérieure au quatrième seuil, le contrôleur de moteur (105) est configuré pour arrêter le moteur électrique (61) avant que la distance de trajet de la bicyclette assistée par batterie, à partir du point de réception en entrée du signal de fonctionnement, atteigne la première distance.

13. Bicyclette assistée par batterie configurée pour fournir une assistance grâce à la force d'entraînement d'un moteur électrique (61), comprenant :
le moteur électrique (61),
un calculateur de vitesse de véhicule (152) configuré pour calculer la vitesse de véhicule de la bicyclette assistée par batterie,
un dispositif de détermination de premier état (150) configuré pour déterminer que la bicyclette assistée par batterie se trouve dans un premier état, la bicyclette assistée par batterie se déplaçant par force d'entraînement grâce au moteur électrique (61) sans effort sur les pédales dans le premier état,
une unité de fonctionnement (190) configurée pour délivrer en sortie un signal de fonctionnement utilisé pour donner l'ordre d'arrêt du moteur électrique (61),
une unité de mesure de distance de trajet (166) configurée pour mesurer la distance du trajet depuis un point où le signal de fonctionnement est reçu en entrée, et
un contrôleur de moteur (105) configuré pour commander l'entraînement du moteur électrique (61) de telle sorte que la force d'entraînement, obtenue lorsque la distance du trajet depuis le point de réception en entrée du signal de fonctionnement a atteint une seconde distance, représente une troisième force d'entraînement, et pour arrêter le moteur électrique (61) après que la distance de trajet depuis le point de réception en entrée du signal de fonctionnement a dépassé la seconde distance, si le dispositif de détermination de premier état (150) a défini que la bicyclette assistée par batterie se trouve dans le premier état et que le signal de fonctionnement est reçu en entrée en provenance de l'unité de fonctionnement (190).

14. Bicyclette assistée par batterie selon la revendication 13, comprenant en outre un dispositif de réglage de force d'entraînement (164) configuré pour régler la force d'entraînement du moteur électrique (61) au point correspondant à la réception en entrée du signal de fonctionnement en tant que quatrième force d'entraînement, et configuré pour régler une force d'entraînement qui est inférieure ou égale à la quatrième force d'entraînement en tant que troisième force d'entraînement, le contrôleur de moteur (105) étant configuré pour commander l'entraînement du moteur électrique (61) de telle sorte que la force d'entraînement du moteur électrique (61) se modifie de quatrième force d'entraînement en troisième force d'entraînement.

15. Bicyclette assistée par batterie selon la revendication 14, comprenant en outre :
un détecteur d'accélération (161) configuré pour détecter une accélération de la bicyclette assistée par batterie,
un comparateur d'accélération (163) configuré pour comparer l'accélération détectée par le détecteur d'accélération (161) à un cinquième seuil défini en tant que seuil pour les accélérations positives et à un sixième seuil défini en tant que seuil pour les accélérations négatives jusqu'à ce que la distance de trajet de la bicyclette assistée par batterie depuis le point de réception en entrée du signal de fonctionnement atteigne la seconde distance, et
un dispositif de réglage de taux de changement de force d'entraînement (165) configuré pour régler les troisième et quatrième taux de changement, le quatrième taux de changement étant inférieur au troisième taux de changement, sous réserve que la force d'entraînement du moteur électrique (61) se modifie de quatrième force d'entraînement en troisième force d'entraînement avec le troisième taux de changement, dans laquelle
le contrôleur de moteur (105) est configuré pour commander l'entraînement du moteur électrique (61), jusqu'à ce que la distance de trajet de la bicyclette assistée par batterie depuis le point de réception en entrée du signal de fonctionnement atteigne la seconde distance, de sorte à ce que la force d'entraînement du moteur électrique (61) se modifie au troisième taux de changement si l'accélération détectée par le détecteur d'accélération (161) est inférieure ou égale au cinquième seuil et est supérieure ou égale au sixième seuil, et de sorte à ce que la force d'entraînement du moteur électrique (61) se modifie au quatrième taux de changement si l'accélération détectée par le détecteur d'accélération (161) est supérieure au cinquième seuil ou inférieure au sixième seuil.

16. Bicyclette assistée par batterie selon la revendication 15, dans laquelle le contrôleur de moteur (105) est configuré pour stopper le moteur électrique (61) avant que la distance de trajet depuis le point de réception en entrée du signal d'opération atteigne la seconde distance, si l'accélération détectée par le détecteur d'accélération (161) est supérieure au cinquième seuil ou inférieure au sixième seuil.

17. Bicyclette assistée par batterie selon l'une quelconque des revendications 1 à 8, comprenant en outre un dispositif de réglage de temps (159) configuré pour régler la longueur du temps entre le point de réception en entrée du signal de fonctionnement et le point où le moteur électrique (61) est stoppé.

18. Bicyclette assistée par batterie selon l'une quelconque des revendications 9 à 16, comprenant en outre un dispositif de réglage de distance (168) configuré pour régler une distance de trajet entre le point de réception en entrée du signal de fonctionnement et le point où le moteur électrique (61) est stoppé.

19. Bicyclette assistée par batterie selon l'une quelconque des revendications 1 à 18, dans lequel le dispositif de détermination de premier état (150) est configuré pour déterminer que le premier état est atteint si aucun utilisateur cycliste n'est détecté et qu'une vitesse de véhicule est générée.

20. Bicyclette assistée par batterie selon l'une quelconque des revendications 1 à 18, comprenant en outre un détecteur de couple (57) configuré pour détecter le couple généré par un effort sur les pédales, et
un détecteur de rotation du moteur (68) configuré pour détecter la rotation du moteur électrique (61), dans laquelle
le dispositif de détermination de premier état (150) est configuré pour déterminer que le premier état est atteint si un effort sur les pédales est inférieur ou égal à une valeur prescrite, si la rotation du moteur électrique (61) est supérieure ou égale à une valeur prescrite et si la vitesse de véhicule est inférieure ou égale à une valeur prescrite, sur la base des résultats provenant du détecteur de couple (57) et du détecteur de rotation de moteur (68) et sur la vitesse de véhicule calculée par le calculateur de vitesse de véhicule (152).

21. Bicyclette assistée par batterie selon l'une quelconque des revendications 1 à 18, comprenant en outre :
un détecteur de compression de siège configuré pour détecter la pression appliquée sur la surface d'assise du siège (24), et
un dispositif de détermination de compression du siège configuré pour déterminer si la pression détectée par le détecteur de compression de siège est inférieure ou égale à une valeur prescrite, le dispositif de détermination de premier état (150) étant configuré pour déterminer que le premier état est atteint si la pression appliquée sur la surface d'assise du siège, déterminée par le dispositif de détermination de compression du siège, est inférieure ou égale à une valeur prescrite.
